# EUROPÄISCHE PATENTSCHRIFT

(11) **EP 1 793 269 B1**
(45) Veröffentlichungstag und Bekanntmachung des Hinweises auf die Patenterteilung: **27.04.2011**
(21) Anmeldenummer: 06014502.6
(22) Anmeldetag: 12.07.2006
(51) Int. Cl.: G02F 1/29, G02B 27/00

(54) **Vorrichtung zur Beeinflussung von Licht**
Light influencing device
Dispositif destiné à influencer la lumière

(30) Priorität: 01.12.2005 DE 102005057660
(43) Veröffentlichungstag der Anmeldung: 06.06.2007
(73) Patentinhaber: LIMO Patentverwaltung GmbH & Co. KG, 36419 Gerstengrund (DE)
(72) Erfinder: Lissotschenko, Vitalij, Dr., 58730 Fröndenberg (DE); Mikhailov, Aleksei, 44227 Dortmund (DE); Darsht, Maxim, Dr., 44309 Dortmund (DE); Mikliaev, Iouri, Dr., 454025 Cheljabinsk (RU)
(74) Vertreter: Basfeld, Rainer

(56) Entgegenhaltungen:
- DE-A1- 19 918 391
- US-A- 5 600 666
- US-B1- 6 341 136
- US-B1- 6 400 855
- OPTICAL SCANNING SYSTEMS: DESIGN AND APPLICATIONS 30-31 JULY 1997 SAN DIEGO, CA, USA, Bd. 3131, 1997, Seiten 111-123, XP002427373 Proceedings of the SPIE - The International Society for Optical Engineering SPIE-Int. Soc. Opt. Eng USA ISSN: 0277-786X

## Beschreibung

Die vorliegende Erfindung betrifft eine Vorrichtung zur Beeinflussung von Licht gemäß dem Oberbegriff des Anspruchs 1 sowie Verwendungen einer derartigen Vorrichtung.

Definitionen: In Ausbreitungsrichtung des zu beeinflussenden Lichts meint die mittlere Ausbreitungsrichtung des Lichts, insbesondere wenn dieses keine ebene Welle ist oder zumindest teilweise divergent ist. Mit Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil, der keinen infinitesimal kleinen, sondern einen ausgedehnten Strahlquerschnitt aufweist.

Eine Vorrichtung der eingangs genannten Art ist aus der US 6,341,136 B1 bekannt. Bei der darin beschriebenen Vorrichtung ist das erste Array von Phasen-Veränderungs-Mitteln dicht hinter dem ersten Array von Linsenmitteln, insbesondere etwa in deren ausgangsseitiger Brennebene angeordnet. Weiterhin ist ein zweites Array von Phasen-Veränderungs-Mitteln vorgesehen, das kurz vor dem zweiten Array von Linsenmitteln, insbesondere etwa in deren eingangsseitiger Brennebene angeordnet ist. Durch die ersten Linsenmittel, die als eine Bikonvexlinse ausgebildet sind, wird eine Fouriertransformation der Intensitätsverteilung in der Ebene des ersten Arrays von Phasen-Veränderungs-Mitteln in die Ebene des zweiten Arrays von Phaseh-Veränderungs-Mitteln durchgeführt. Durch eine derartige Vorrichtung kann ein Lichtstrahl sehr schnell um vergleichsweise große Winkel abgelenkt werden, weil vor dem zweiten Array von Linsenmitteln Intensitätsmaxima entstehen, die durch die Phasenveränderung quer zu den Linsenmitteln leicht verschoben werden können. Diese Verschiebung ergibt aufgrund der großen Nähe zu den Linsenmitteln eine Ablenkung um einen großen Winkel.

Nachteilig bei einer derartigen Vorrichtung ist es, dass keine breitbandigen Laserlichtquellen, wie beispielsweise Halbleiterlaser verwendet werden können, weil die Abbildung durch das erste Array von Linsenmitteln in die Ebene des ersten Arrays von Phasen-Veränderungs-Mitteln von der Wellenlänge des verwendeten Lichts abhängt. Bei Licht mit deutlich unterschiedlichen Wellenlängen, wie bei einem Halbleiterlaser, wird die in die Ebene des zweiten Arrays von Phasen-Veränderungs-Mitteln transformierte Intensitätsverteilung für unterschiedliche Wellenlängen Maxima an unterschiedlichen Stellen aufweisen, so dass die Strahlablenkung für unterschiedliche Wellenlängen in unterschiedliche Richtungen erfolgen wird.

Das der vorliegenden Erfindung zugrunde liegende Problem ist die Schaffung einer Vorrichtung der eingangs genannten Art, die effektiver aufgebaut ist. Weiterhin sollen Verwendungen der Vorrichtung angegeben werden.

Dies wird erfindungsgemäß hinsichtlich der Vorrichtung durch eine Vorrichtung der eingangs genannten Art mit den kennzeichnenden Merkmalen des Anspruchs 1 sowie hinsichtlich der Verwendungen durch Verwendungen gemäß den Ansprüchen 24 und/oder 27 erreicht. Die Unteransprüche betreffen bevorzugte Ausgestaltungen der Erfindung.

Die erfindungsgemäße Vorrichtung ermöglicht insbesondere eine hochauflösende Strahlablenkung, die sehr schnell, beispielsweise im Bereich von 10⁻¹⁰ s erfolgen kann Dadurch ergeben sich vielfältige Anwendungen beispielsweise im Bereich der optischen Datenspeicherung und des Laserfernsehens.

Gemäß Anspruch 1 ist vorgesehen, dass die Vorrichtung zweite Linsenmittel umfasst, die zwischen den ersten Linsenmitteln und dem zweiten Array von Linsenmitteln angeordnet sind, wobei das erste Array von Phasen-Veränderungs-Mitteln zwischen den ersten Linsenmitteln und den zweiten Linsenmitteln angeordnet ist. Dabei erfolgt durch die ersten und die zweiten Linsenmittel eine zweifache Fouriertransformation des zu beeinflussenden Lichts, wobei das erste Array von Phasen-Veränderungs-Mitteln etwa im Bereich der ausgangsseitigen Fourierebene der ersten Linsenmittel und im Bereich der eingangsseitigen Fourierebene der zweiten Linsenmittel angeordnet ist. Dadurch ergibt sich die Möglichkeit, auch Laserlichtquellen mit größerer Bandbreite, wie beispielsweise Halbleiterlaser zu verwenden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Ansicht einer Vorrichtung zur Beeinflussung von Licht, die zwar nicht der erfindungsgemäßen Vorrichtung entspricht, trotzdem jedoch das Verständnis der Erfindung erleichtern kann;
- Fig. 2: eine schematische Ansicht der Vorrichtung gemäß Fig. 1 mit schematisch eingezeichneten Wellenfronten des die Vorrichtung verlassenden Lichts;
- Fig. 3: die Ansicht gemäß Fig. 2 mit angeschaltetem erstem Array von Phasen-Veränderungs-Mitteln;
- Fig. 4: die Ansicht gemäß Fig. 2 mit angeschaltetem erstem und zweitem Array von Phasen-Veränderungs-Mitteln;
- Fig. 5: eine schematische Ansicht einer ersten Ausführungsform eines Arrays von Phasen-Veränderungs-Mitteln;
- Fig. 6: eine schematische Ansicht einer zweiten Ausführungsform eines Arrays von Phasen-Veränderungs-Mitteln;
- Fig. 7: eine schematische Ansicht einer dritten Ausführungsform eines Arrays von Phasen-Veränderungs-Mitteln;
- Fig. 8: eine schematische Ansicht einer ersten Ausführungsform einer erfindungsgemäßen Vorrichtung mit schematisch eingezeichneten Wellenfronten des die Vorrichtung verlassenden Lichts;
- Fig. 9a: eine schematische Ansicht einer zweiten Ausführungsform einer erfindungsgemäßen Vorrichtung;
- Fig. 9b: eine um 90° gedrehte Ansicht der zweiten Ausführungsform gemäß Fig. 9a;
- Fig. 10: eine schematische Ansicht einer dritten Ausführungsform einer erfindungsgemäßen Vorrichtung;
- Fig. 11: eine schematische Ansicht einer weiteren Ausführungsform einer Vorrichtung zur Beeinflussung von Licht, die zwar nicht der erfindungsgemäßen Vorrichtung entspricht, trotzdem jedoch das Verständnis der Erfindung erleichtern kann;
- Fig. 12: eine schematische Ansicht einer weiteren Ausführungsform einer Vorrichtung zur Beeinflussung von Licht, die zwar nicht der erfindungsgemäßen Vorrichtung entspricht, trotzdem jedoch das Verständnis der Erfindung erleichtern kann;
- Fig. 13: eine schematische Ansicht einer weiteren Ausführungsform einer Vorrichtung zur Beeinflussung von Licht, die zwar nicht der erfindungsgemäßen Vorrichtung entspricht, trotzdem jedoch das Verständnis der Erfindung erleichtern kann;
- Fig. 14: eine schematische Ansicht einer weiteren Ausführungsform einer Vorrichtung zur Beeinflussung von Licht, die zwar nicht der erfindungsgemäßen Vorrichtung entspricht, trotzdem jedoch das Verständnis der Erfindung erleichtern kann;
- Fig. 15: eine schematische Ansicht einer weiteren Ausführungsform einer Vorrichtung zur Beeinflussung von Licht, die zwar nicht der erfindungsgemäßen Vorrichtung entspricht, trotzdem jedoch das Verständnis der Erfindung erleichtern kann;
- Fig. 16: eine schematische Ansicht einer weiteren Ausführungsform einer Vorrichtung zur Beeinflussung von Licht, die zwar nicht der erfindungsgemäßen Vorrichtung entspricht, trotzdem jedoch das Verständnis der Erfindung erleichtern kann;
- Fig. 17: eine schematische Ansicht einer Anordnung zur Verbindung zweier Lichtleiter, in der zwar keine erfindungsgemäße Vorrichtung abgebildet ist, trotzdem jedoch eine Anwendung als bidirektionaler Kommutator verdeutlicht ist.

In manchen der Figuren ist zur besseren Orientierung ein kartesisches Koordinatensystem eingezeichnet.

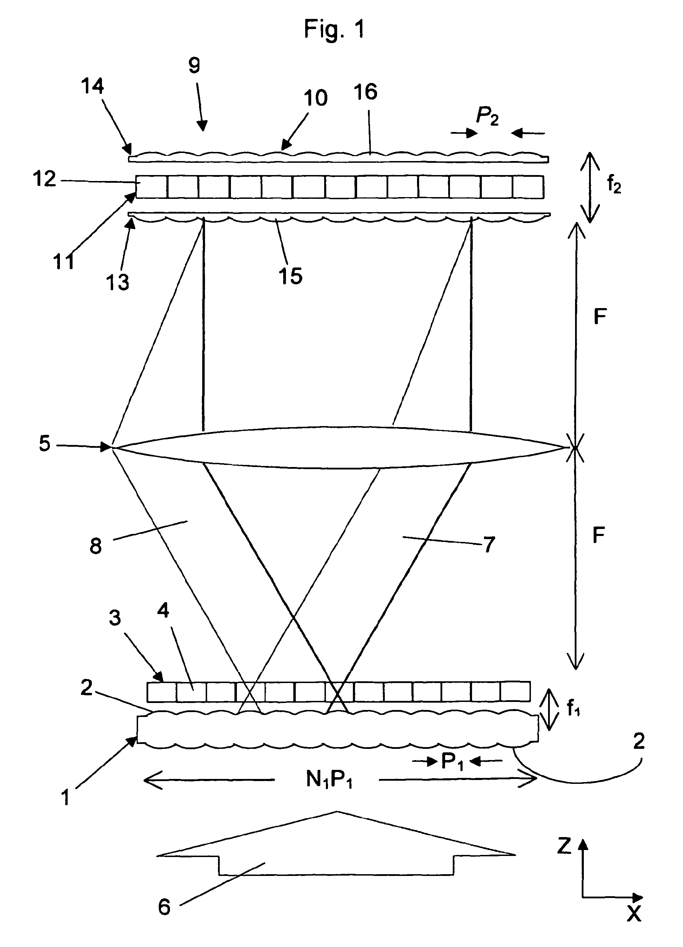

Die Fig.1 bis 7 zeigen schematische Ansichten von Vorrichtungen zur Beeinflussung von Licht, die zwar nicht der erfindungsgemäßen Vorrichtung entsprechen, trotzdem jedoch das Verständnis der Erfindung erleichtern können.

Die in Fig. 1 bis Fig. 4 abgebildete Ausführungsform einer Vorrichtung zur Beeinflussung von Licht umfasst ein erstes Array 1 von Linsenmitteln 2. Bei diesen Linsenmitteln 2 kann es sich um in X-Richtung nebeneinander angeordnete Zylinderlinsen mit in Y-Richtung ausgerichteten Zylinderachsen handeln. Die Zylinderlinsen können als Bikonvex- oder Plankonvex-Linsen ausgebildet sein. Weiterhin besteht die Möglichkeit, dass zwei Substrate vorgesehen sind, auf denen jeweils einander entsprechende plankonvexe Zylinderlinsen ausgebildet sind. Es besteht die Möglichkeit, anstelle der Zylinderlinsen sphärische Linsen zu verwenden.

Die in Fig. 1 bis Fig. 4 abgebildete Ausführungsform umfasst weiterhin ein erstes Array 3 von Phasen-Veränderungs-Mitteln 4. Die Phasen-Veränderungs-Mittel 4 sind in X-Richtung nebeneinander angeordnet. Im abgebildeten Ausführungsbeispiel entspricht die Anzahl der Phasen-Veränderungs-Mittel 4 der Anzahl der Linsenmittel 2. Die Phasen-Veränderungs-Mittel 4 sind im Bereich der ausgangsseitigen Brennebene der Linsenmittel 2 angeordnet, so dass in Ausbreitungsrichtung Z des Lichts jeweils eines der Linsenmittel 2 mit einem der Phasen-Veränderungs-Mittel 4 fluchtet. Die Breite eines jeden der Linsenmittel 2 beziehungsweise eines jeden der Phasen-Veränderungs-Mittel 4 in X-Richtung ist in Fig. 1 mit dem Bezugszeichen P₁ versehen (von Englisch: Pitch). Daher ist die Breite des ersten Arrays 1 von Linsenmitteln 2 in X-Richtung gleich N₁ P₁, wobei N₁ die Anzahl der Linsenmittel 2 ist.

Die Phasen-Veränderungs-Mittel 4 können beispielsweise als elektrooptische Modulatoren, als akustooptische Modulatoren oder als Flüssigkristallmodulatoren ausgebildet sein.

In Ausbreitungsrichtung Z des Lichts hinter dem ersten Array 3 von Phasen-Veränderungs-Mitteln 4 ist ein erstes als Fouriertransformationselement dienendes Linsenmittel 5 angeordnet. Dieses erste Linsenmittel 5 ist im abgebildeten Ausführungsbeispiel als Bikonvexlinse ausgebildet. Die Entfernung zwischen der Brennebene der Linsenmittel 2 des ersten Arrays 1 und dem ersten als Fouriertransformationselement dienenden Linsenmittel 5 entspricht der Brennweite F des Linsenmittels 5. Der Abstand zwischen dem ersten Array 1 von Linsenmitteln 2 und dem ersten Linsenmittel 5 beträgt also F + f₁, wobei f₁ die Brennweite der Linsenmittel 2 des ersten Arrays 1 ist.

Das auf die Vorrichtung in Z-Richtung auftreffende Licht ist mit dem Bezugszeichen 6 versehen. Dieses Licht kann beispielsweise als ebene Welle ausgebildet sein, die exakt in Z-Richtung propagiert. Es besteht aber auch die Möglichkeit, dass eine oder mehrere Wellen aus unterschiedlichen Richtungen auf das erste Array 1von Linsenmitteln 2 auftreffen.

Das Licht 6 wird nach dem Hindurchtritt durch das das erste Array 1 von Linsenmitteln 2 in deren Brennebene in eine Mehrzahl von in X-Richtung zueinander beabstandeten Teilstrahlen aufgespalten, die Strahltaillen aufweisen, deren Ausdehnung in X-Richtung kleiner ist als die Breite der einzelnen Phasen-Veränderungs-Mittel 4. Dadurch wird der Hindurchtritt der Teilstrahlen durch die Phasen-Veränderungs-Mittel 4 gewährleistet. In der in Z-Richtung ausgangsseitigen Brennebene des ersten als Fouriertransformationselement dienenden Linsenmittels 5 entstehen eine Mehrzahl von lokalen, in X-Richtung zueinander beabstandeten Intensitätsmaxima des zu beeinflussenden Lichts 6. In Fig. 1 sind zwei Teilstrahlen 7, 8 mit entsprechenden Intensitätsmaxima in der ausgangsseitigen Brennebene des ersten Linsenmittels 5 eingezeichnet.

Die in Fig. 1 bis Fig. 4 abgebildete Ausführungsform der Vorrichtung umfasst weiterhin ein zweites Array 9 von Linsenmitteln 10 sowie ein zweites Array 11 von Phasen-Veränderungs-Mitteln 12. Dabei ist das zweite Array 9 von Linsenmitteln 10 zweistufig aufgebaut mit zwei Substraten 13, 14 auf denen jeweils Linsenelemente 15, 16 als plankonvexe Zylinderlinsen ausgebildet sind. Eine Ausbildung als bikonvexe oder konkavkonvexe Zylinderlinsen ist ebenfalls möglich. Der Abstand der Zylinderlinsen 15, 16 in Z-Richtung auf unterschiedlichen Substraten 13, 14 kann dabei der Brennweite f₂ der auf dem in Ausbreitungsrichtung Z des Lichts zweiten Substrat 14 entsprechen. Das zweite Array 9 von Linsenmitteln 10 kann auch nur ein Substrat umfassen, wobei die Zylinderlinsen als Bikonvex- oder Plankonvex-Linsen oder Konkavkonvex-Linsen ausgebildet sein können.

Bei dem Ausführungsbeispiel gemäß den Fig. 1 bis Fig. 4 sind die beiden Substrate 13, 14 voneinander in Z-Richtung beabstandet. Zwischen ihnen ist das zweite Array 11 von Phasen-Veränderungs-Mitteln 12 angeordnet. Es besteht aber auch die Möglichkeit, dass das zweite Array 11 von Phasen-Veränderungs-Mitteln 12 vor oder hinter dem zweiten Array 9 von Linsenmitteln 10 angeordnet ist.

Bei diesen Linsenmitteln 10 kann es sich um in X-Richtung nebeneinander angeordnete Zylinderlinsen mit in Y-Richtung ausgerichteten Zylinderachsen handeln.

Im abgebildeten Ausführungsbeispiel entspricht die Anzahl der Phasen-Veränderungs-Mittel 12 der Anzahl der Linsenmittel 10. Die Phasen-Veränderungs-Mittel 12 sind so angeordnet, dass in Ausbreitungsrichtung Z des Lichts jeweils eines der Linsenmittel 10 mit einem der Phasen-Veränderungs-Mittel 12 fluchtet. Die Breite eines jeden der Linsenmittel 10 beziehungsweise eines jeden der Phasen-Veränderungs-Mittel 12 in X-Richtung ist in Fig. 1 mit dem Bezugszeichen P₂ versehen. Daher ist die Breite des zweiten Arrays 9 von Linsenmitteln 10 in X-Richtung gleich N₂·P₂, wobei N₂ die Anzahl der Linsenmittel 10 des zweiten Arrays 9 ist.

Die Intensitätsmaxima des durch das erste als Fouriertransformationselement dienenden Linsenmittels 5 hindurch getretenen Lichts entstehen in Z-Richtung kurz vor dem zweiten Array 9 von Linsenmitteln 10. Der Abstand zwischen den Maxima und dem zweiten Array 9 kann etwa der Brennweite der Linsenelemente 15 auf dem ersten Substrat 13 entsprechen oder etwas kleiner oder größer als dieser sein.

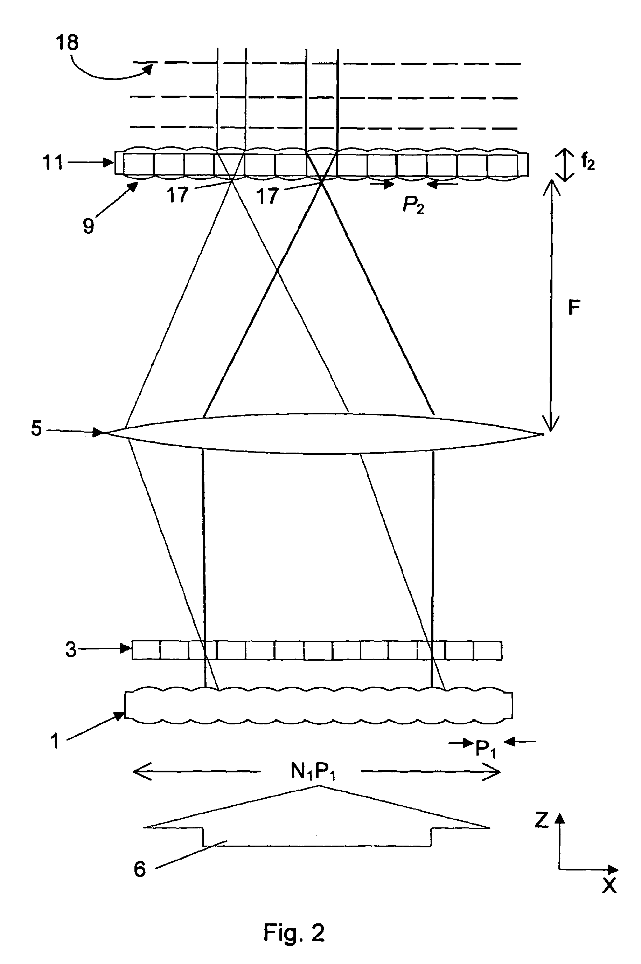

In Fig. 2 bis Fig. 4 sind gleiche Teile mit gleichen Bezugszeichen versehen wie in Fig. 1. Aus Fig. 2 ist ersichtlich, dass bei einer ebenen in Z-Richtung propagierenden Welle als einfallendem Licht 6 und nicht aktiviertem erstem und zweitem Array 3, 11 von Phasen-Veränderungs-Mitteln 4, 12 die lokalen Intensitätsmaxima 17 in Ausbreitungsrichtung Z fluchtend vor den Scheitelpunkten der Linsenelemente 15, 16 der Linsenmittel 10 des zweiten Arrays 9 von Linsenmitteln 10 angeordnet sind, so dass das Licht das zweite Array 9 in Z-Richtung als ebene Welle verlässt, deren schematisch eingezeichneten Wellenfronten 18 parallel zur X-Richtung sind. Da die Phasen-Veränderungs-Mittel 4, 12 nicht aktiviert sind, wird das Licht im Fernfeld nicht abgelenkt und propagiert weiterhin in positiver Z-Richtung.

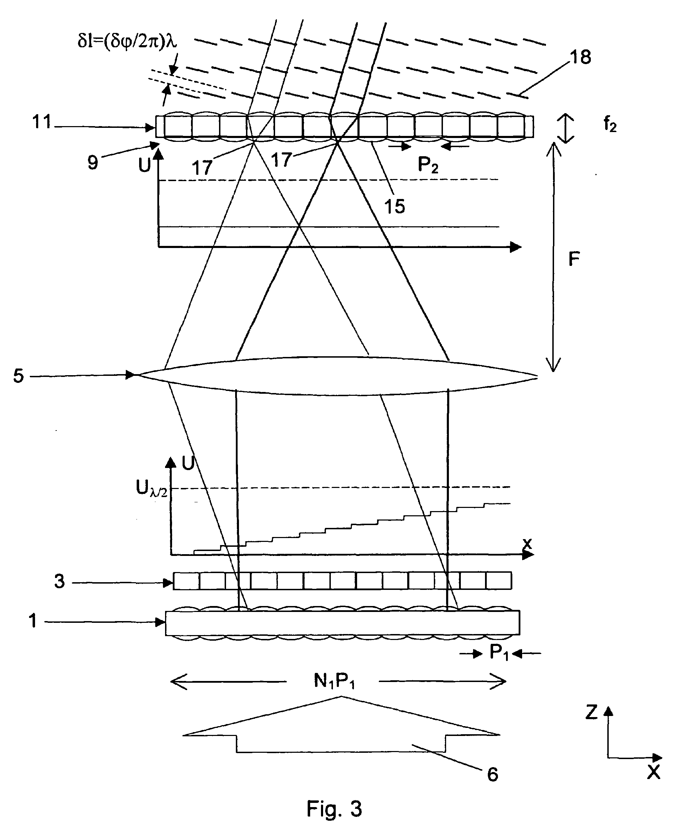

In Fig. 3 sind die ersten Phasen-Veränderungs-Mittel 4 als elektrooptische Modulatoren ausgebildet und aktiviert. Hinter den Phasen-Veränderungs-Mitteln 4 ist in Fig. 3 beispielhaft die Spannung U eingezeichnet, die an die elektrooptischen Modulatoren angelegt wird. Es zeigt sich, dass der in Fig. 3 am äußersten linken Rand angeordnete Modulator nicht mit Spannung beaufschlagt wird, wohingegen der am äußersten rechten Rand angeordnete Modulator mit einer vergleichsweise großen Spannung beaufschlagt wird. Die zwischen diesen beiden Rändern angeordneten Modulatoren werden mit einer von links nach rechts stufenförmig ansteigenden Spannung beaufschlagt.

In Fig. 3 ist weiterhin eine Spannung U_{λ/2} eingezeichnet, die einer Phasenveränderung des durch den Modulator hindurch tretenden Lichts um eine halbe Wellenlänge λ des Lichts entspricht. Es zeigt sich, dass die an die als Modulatoren ausgebildeten Phasen-Veränderungs-Mittel 4 angelegten Spannungen kleiner als U_{λ/2} sind, so dass die von den Phasen-Veränderungs-Mitteln 4 bewirkten Phasenveränderungen kleiner als λ/2 sind.

Die an die Phasen-Veränderungs-Mittel 4 angelegten Spannungen bewirken aufgrund von Interferenzeffekten, dass das Licht aus dem Array 3 unter einem Winkel zur Z-Richtung austritt. Dementsprechend sind nach Abbildung durch das erste Linsenmittel 5 die Intensitätsmaxima 17 gegenüber dem in Fig. 2 abgebildeten Zustand nach links verschoben, so dass sie nicht mehr mit den Scheitelpunkten der Linsenelemente 15 fluchten. Diese relativ kleine Verschiebung bewirkt aufgrund der kleinen Größe der Linsenmittel 10 des zweiten Arrays 9 beziehungsweise aufgrund deren kleiner Brennweite einen vergleichsweise großen Winkel ϕ zwischen dem aus dem zweiten Array 9 von Linsenmitteln 10 austretenden Licht und der Z-Richtung. Allerdings weisen zueinander benachbarte Teile der Wellenfront des austretenden Lichts eine Phasendifferenz δl=(δϕ/2π)λ auf (siehe dazu auch Fig. 3). Diese Phasendifferenz δl führt dazu, dass das Licht nur in bestimmte Richtungen, für die sich eine konstruktive Interferenz zwischen den einzelnen Teilen des Lichts ergibt, aus dem zweiten Array 9 von Linsenmitteln 10 austreten kann. Diese Situation ähnelt etwa der am Ausgang eines Gitters.

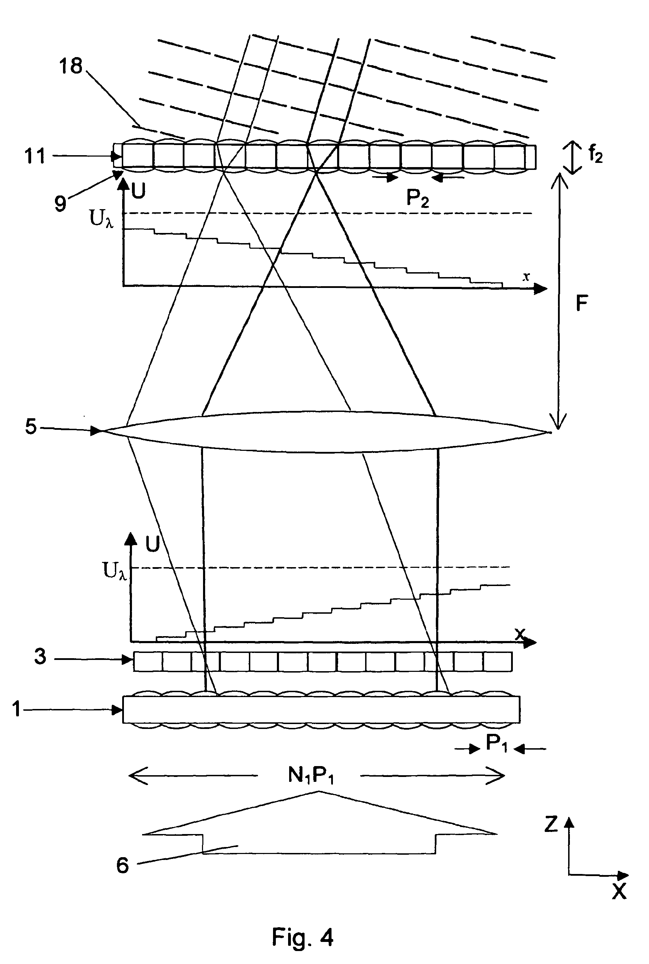

Bei dem in Fig. 4 abgebildeten Zustand ist zusätzlich auch noch das zweite Array 11 von Phasen-Veränderungs-Mitteln 12 aktiviert. Hier wird die höchste Spannung U am rechten Rand und die niedrigste Spannung am linken Rand angelegt. Die dadurch induzierte Phasenverschiebung führt dazu, dass benachbarte Teile der Wellenfront des austretenden Lichts die gleiche Phase aufweisen, so dass das austretende Licht in beliebige Richtungen abgelenkt werden kann.

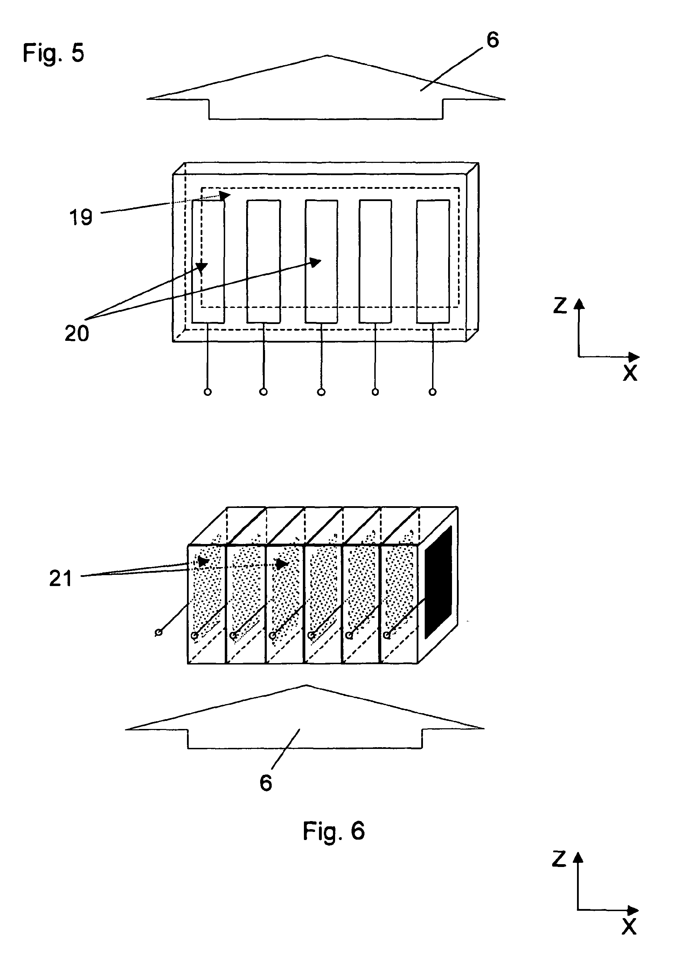

Fig. 5 bis Fig. 7 zeigen beispielhafte Ausführungsformen der Arrays 3, 11 von Phasen-Veränderungs-Mitteln 4, 12, die als elektrooptische Modulatoren ausgeführt sind. Bei der Ausführungsform gemäß Fig. 5 ist auf der in Fig. 5 hinteren Seite des Modulators eine gemeinsame Elektrode 19 angeordnet, wohingegen auf der vorderen Seite eine Mehrzahl von einzelnen Elektroden 20 angeordnet sind. Das elektrische Feld wird sich zwischen ihnen in Y-Richtung aufbauen.

Bei der Ausführungsform gemäß Fig. 6 ist auf den in X-Richtung äußeren Flächen und zwischen zwei benachbarten Modulator-Elementen jeweils eine Elektrode 21 vorgesehen. Das elektrische Feld wird sich zwischen diesen Elektroden in X-Richtung aufbauen.

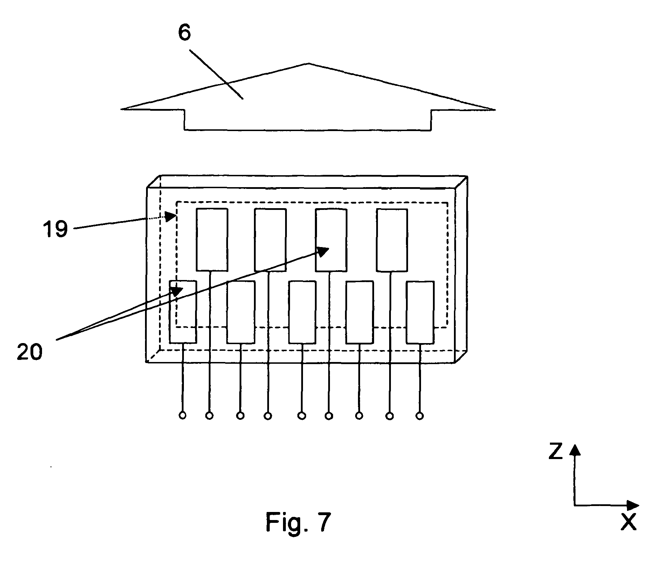

Die Ausführungsform gemäß Fig. 7 entspricht der gemäß Fig. 5, bis auf die Tatsache, dass die Elektroden 20 in Z-Richtung versetzt zueinander angeordnet sind.

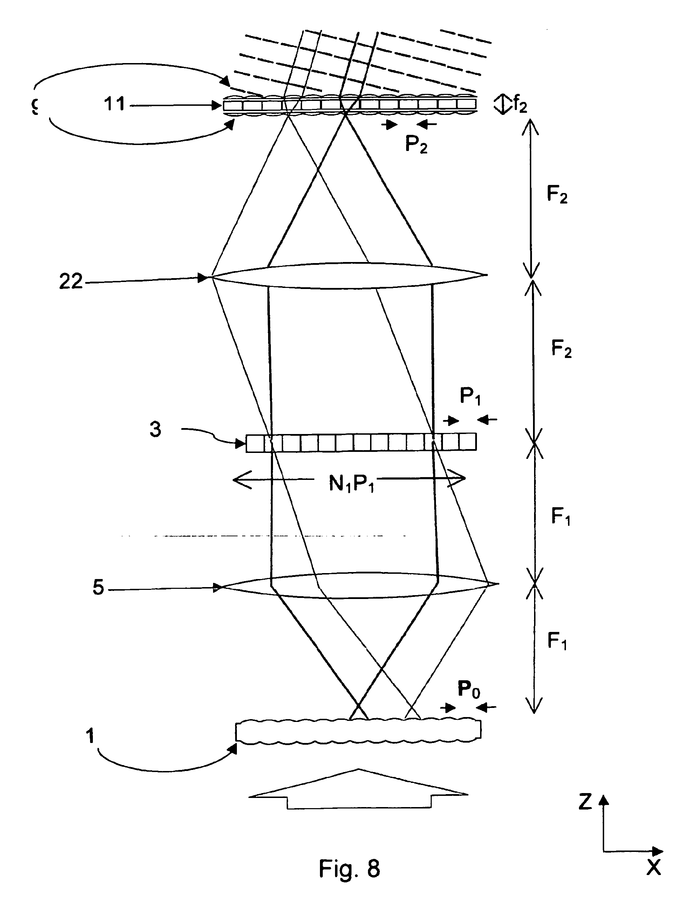

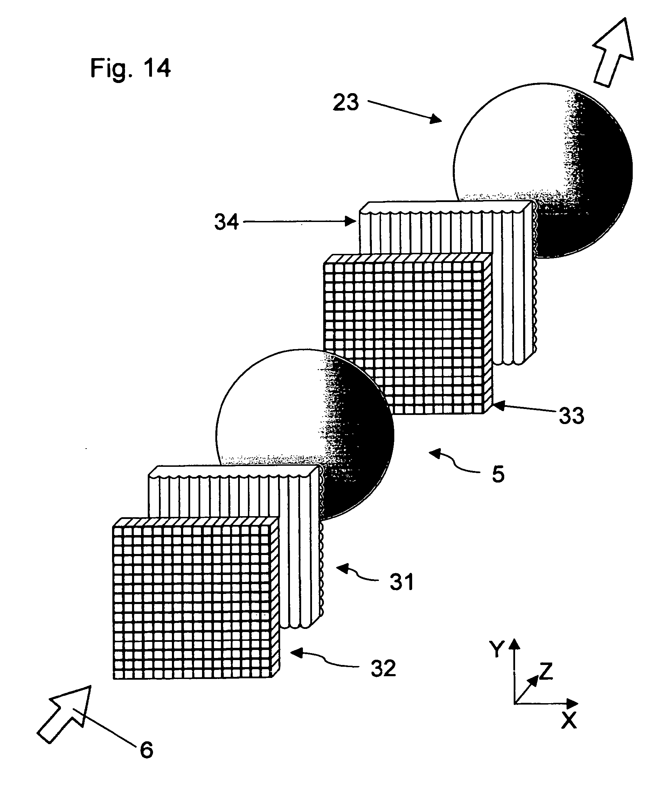

In Fig. 8 bis Fig. 12 und in Fig. 14 bis Fig. 16 sind gleiche Teile mit gleichen Bezugszeichen versehen wie in Fig. 1 bis Fig. 4. Die mit gleichen Bezugszeichen versehenen Teile können dabei auf gleiche oder ähnliche Weise in der Vorrichtung angeordnet sein und eine gleiche oder ähnliche Funktion erfüllen wie in Fig. 1 bis Fig. 4.

In Verbindung mit den Fig. 8 bis 11 werden im Folgenden Ausführungsformen der Erfindung beschrieben.

Bei der erfindungsgemäßen Ausführungsform der Vorrichtung gemäß Fig. 8 ist das erste Array 3 von Phasen-Veränderungs-Mitteln 4 nicht im Bereich des ersten Arrays 1 von Linsenmitteln 2 angeordnet, sondern in der ausgangsseitigen Brennebene des ersten als Fouriertransformationselement dienenden Linsenmittels 5. Die Vorrichtung umfasst ein zweites als Fouriertransformationselement dienendes Linsenmittel 22, das zu dem zweiten Array 9 von Linsenmitteln 10 den gleichen Abstand aufweist wie das erste Linsenmittel 5 in der Ausführungsform gemäß Fig. 1 bis 4. Das erste Array 3 von Phasen-Veränderungs-Mitteln 4 ist in der eingangsseitigen Brennebene des zweiten Linsenmittels 22 angeordnet.

Die eingangsseitige Brennebene des ersten Linsenmittels 5 fällt mit der ausgangsseitigen Brennebene des ersten Arrays 1 von Linsenmitteln 2 zusammen. In Fig. 8 ist die entsprechende Brennweite des beispielsweise als Bikonvexlinse ausgeführten ersten Linsenmittels 5 mit F₁ bezeichnet. Die ausgangsseitige Brennebene des ersten Linsenmittels 5 fällt mit der eingangsseitigen Brennebene des zweiten Linsenmittels 22 zusammen. In Fig. 8 ist die entsprechende Brennweite des beispielsweise als Bikonvexlinse ausgeführten zweiten Linsenmittels 22 mit F₂ bezeichnet. Die Brennweiten F₁ und F₂ können dabei gleich oder verschieden voneinander sein.

Die zweidimensionale, in der eingangsseitigen Brennebene des ersten Linsenmittels 5 vorliegende Intensitätsverteilung des zu beeinflussenden Lichts wird durch das erste Linsenmittel fouriertransformiert. Die eingangsseitige Brennebene des ersten Linsenmittels 5 kann auch als Objektebene und die Intensitätsverteilung in dieser Objektebene als Objekt angesehen werden. Die Fouriertransformation der eingangsseitigen Intensitätsverteilung entsteht in der ausgangsseitigen Brennebene des ersten Linsenmittels 5. Diese ausgangsseitige Brennebene entspricht der Fourierebene des als Fouriertransformationselement wirkenden ersten Linsenmittels 5. Durch die erste Linse 5 wird die räumliche Intensitätsverteilung in der eingangsseitigen Brennebene des ersten Linsenmittels 5 in eine Winkelverteilung in der Fourierebene überführt. Das bedeutet, dass in der Fourierebene diejenigen Teilstrahlen, die in der eingangsseitigen Brennebene oder Objektebene hinsichtlich der Z-Richtung den gleichen Winkel aufweisen, in der Fourierebene am gleichen Ort zusammentreffen.

Die in der Fourierebene vorliegende Fouriertransformation des Objekts wird durch das zweite Linsenmittel 22 nochmals fouriertransformiert, so dass in der ausgangsseitigen Brennebene des zweiten Linsenmittels 22 die zweimalige Fouriertransformierte des Objekts und damit eine zweidimensionale Intensitätsverteilung vorliegt, die ein Abbild des Objekts darstellen kann. Damit kann die ausgangsseitige Brennebene des zweiten Linsenmittels 22 auch als Bildebene bezeichnet werden.

Das erste Array 3 von Phasen-Veränderungs-Mitteln 4 ist bei der Ausführungsform gemäß Fig. 8 exakt in der Fourierebene positioniert, so dass die Phasen-Veränderungs-Mittel 4 direkten Einfluss auf die Phasen der Fouriertransformation ausüben können. Wenn die Fouriertransformation als Winkelverteilung angesehen wird, können die Phasen-Veränderungs-Mittel 4 die Winkel zur Ausbreitungsrichtung Z zumindest einzelner Teilbereiche der Fouriertransformation verändern. Dadurch wird aber gezielt Einfluss auf die in der ausgangsseitigen Brennebene des zweiten Linsenmittels 22 entstehende Intensitätsverteilung genommen.

Eine derartige Anordnung des ersten Arrays 3 von Phasen-Veränderungs-Mitteln 4 in der Fourierebene ermöglicht die Verwendung einer vergleichsweise breitbandigen Laserlichtquelle für das zu beeinflussende Licht, wie beispielsweise einen Halbleiterlaser. Dies hat seinen Grund auch darin, dass durch die zweimalige Fouriertransformation durch die Linsenmittel 5, 22 und durch die Phasenbeeinflussung in der Fourierebene eine vergleichsweise exakte Positionierung der Intensitätsmaxima 17 vor dem zweiten Array 9 von Linsenmitteln 10 gewährleistet werden kann, die nicht oder nur in einem akzeptablen Umfang von der Wellenlänge des zu beeinflussenden Lichts abhängig ist.

Es besteht die Möglichkeit, die Linsenmittel 5 und/oder die Linsenmittel 22 nicht als einzelne bikonvexe Linsen, sondern als Mehrzahl von Linsen auszubilden. Beispielsweise können jeweils zwei Linsen verwendet werden, die dicht beieinander angeordnet sind. Derartig hintereinander angeordnete Linsen können hinsichtlich der Fouriertransformation die gleiche Funktion erfüllen, wie die Einzellinsen. Gleichzeitig können, wie hinlänglich bekannt, durch doppelt ausgeführte Linsen Abbildungsfehler vermieden werden.

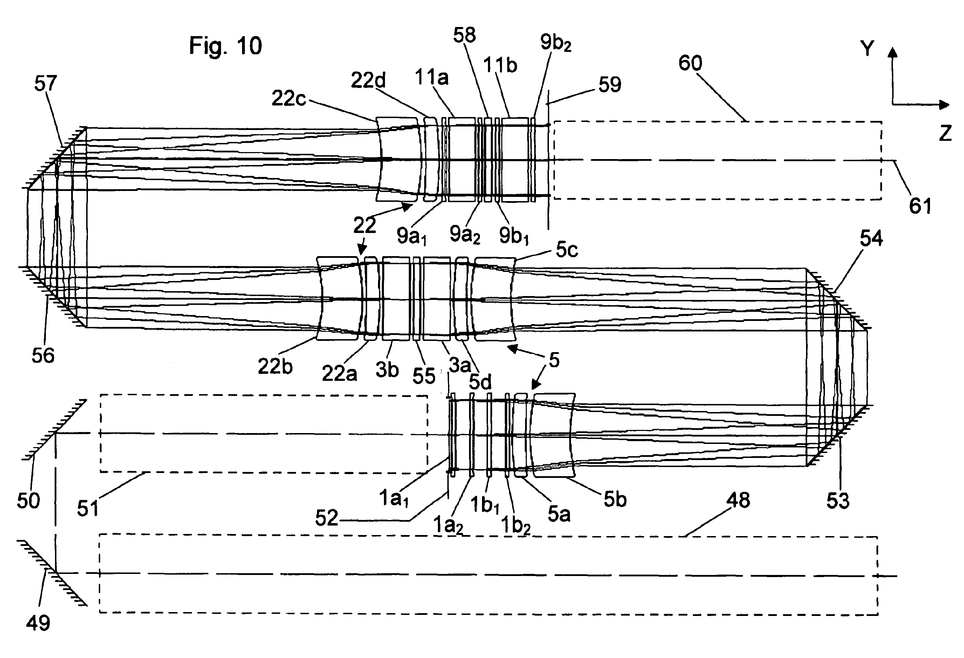

Alternativ oder zusätzlich besteht die Möglichkeit, eine jede der die Linsenmittel bildenden bikonvexen Linsen durch zwei gleiche Linsen zu ersetzen, deren Abstand zueinander etwas kleiner als ihre Brennweite ist. Dadurch ergibt sich ein Linsensystem, das ebenfalls eine Fouriertransformation ausüben kann, dessen Fourierebenen aber wesentlich dichter beieinander liegen, nämlich direkt benachbart zu den jeweiligen Linsen. Ein derartiges System wird im Nachfolgenden noch detailliert unter Bezugnahme auf Fig. 10 beschrieben.

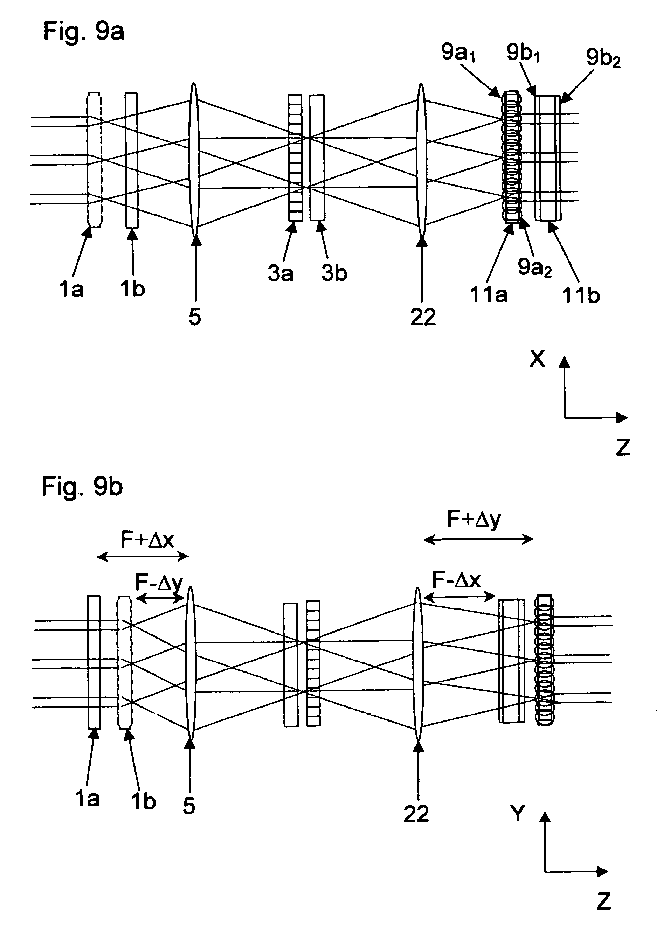

Die erfindungsgemäße Ausführungsform gemäß Fig. 9a und Fig. 9b entspricht hinsichtlich der zweifachen Fouriertransformation der Ausführungsform gemäß Fig. 8.

Im Unterschied zu der Ausführungsform gemäß Fig. 8 sind jedoch bei der Ausführungsform gemäß Fig. 9a und Fig. 9b zwei erste Arrays 1 a, 1b von Linsenmitteln vorgesehen. Das in Fig. 9a und Fig. 9b linke Array 1 a der ersten Arrays 1 a, 1 b von Linsenmitteln weist auf seiner Eintrittsfläche und auf seiner Austrittsfläche jeweils ein Array von Zylinderlinsen auf, deren Zylinderachsen sich in Y-Richtung erstrecken. Das in Fig. 9a und Fig. 9b rechte Array 1 b der ersten Arrays 1 a, 1 b von Linsenmitteln weist auf seiner Eintrittsfläche und auf seiner Austrittsfläche jeweils ein Array von Zylinderlinsen auf, deren Zylinderachsen sich in X-Richtung erstrecken.

Weiterhin sind bei der Ausführungsform gemäß Fig. 9a und Fig. 9b vier zweite Arrays 9a₁, 9a₂, 9b₁, 9b₂ von Linsenmitteln vorgesehen. Die in Fig. 9a und Fig. 9b linken Arrays 9a₁, 9a₂ der zweiten Arrays 9a₁, 9a₂, 9b₁, 9b₂ von Linsenmitteln weisen auf zwei zueinander beabstandeten optisch funktionalen Flächen jeweils ein Array von Zylinderlinsen auf, deren Zylinderachsen sich in Y-Richtung erstrecken. Die in Fig. 9a und Fig. 9b rechten Arrays 9b₁, 9b₂ der zweiten Arrays 9a₁, 9a₂, 9b₁, 9b₂ von Linsenmitteln weisen auf zwei zueinander beabstandeten optisch funktionalen Flächen jeweils ein Array von Zylinderlinsen auf, deren Zylinderachsen sich in X-Richtung erstrecken.

Weiterhin sind bei der Ausführungsform gemäß Fig. 9a und Fig. 9b auch zwei erste Arrays 3a, 3b von Phasen-Veränderungs-Mitteln vorgesehen. Das in Fig. 9a und Fig. 9b linke Array 3a der ersten Arrays 3a, 3b von Phasen-Veränderungs-Mitteln kann die Phasen des zu beeinflussenden Lichts hinsichtlich der X-Richtung verändern. Das in Fig. 9a und Fig. 9b rechte Array 3b der ersten Arrays 3a, 3b von Phasen-Veränderungs-Mitteln kann die Phasen des zu beeinflussenden Lichts hinsichtlich der Y-Richtung verändern.

Weiterhin sind bei der Ausführungsform gemäß Fig. 9a und Fig. 9b auch zwei zweite Arrays 11a, 1 1 b von Phasen-Veränderungs-Mitteln vorgesehen. Das in Fig. 9a und Fig. 9b linke Array 11a der zweiten Arrays 11a, 11b von Phasen-Veränderungs-Mitteln kann die Phasen des zu beeinflussenden Lichts hinsichtlich der X-Richtung verändern. Das in Fig. 9a und Fig. 9b rechte Array 11 b der zweiten Arrays 11a, 11 b von Phasen-Veränderungs-Mitteln kann die Phasen des zu beeinflussenden Lichts hinsichtlich der Y-Richtung verändern.

Zwischen den zweiten Arrays 9a₁ und 9a₂ sowie zwischen den zweiten Arrays 9b₁ und 9b₂ von Linsenmitteln ist jeweils eines der zweiten Arrays 11a, 11 b von Phasen-Veränderungs-Mitteln angeordnet. Diese Gestaltung wird im Zusammenhang mit dem Ausführungsbeispiel gemäß Fig. 10 noch detaillierter erläutert.

Die Anordnung der einzelnen optischen Bauteile bei der Ausführungsform gemäß Fig. 9a und Fig. 9b ist dabei derart gewählt, dass eine zweifache Fouriertransformation hinsichtlich der X-Richtung und eine zweifache Fouriertransformation hinsichtlich der Y-Richtung durch die Linsenmittel 5, 22 erfolgen kann. Dazu entspricht der Abstand zwischen den ersten Linsenmitteln 5 und den ersten Arrays 1 a, 1b von Linsenmitteln nicht genau der Brennweite F der Linsenmittel 5, sondern F+Δx für das linke Array 1 a sowie F-Δy für das rechte Array 1b. Weiterhin entspricht der Abstand zwischen den zweiten Linsenmitteln 22 und den zweiten Arrays 9a₁, 9a₂, 9b₁, 9b₂ von Linsenmitteln nicht genau der Brennweite F der Linsenmittel 22, sondern F-Δx für das Array 9a₁ sowie F+Δy für das Array 9b₁. Dabei sind Δx und Δy kleiner als F, insbesondere klein gegenüber F.

Die erfindungsgemäße Ausführungsform gemäß Fig. 10 entspricht hinsichtlich der zweifachen Fouriertransformation den Ausführungsformen gemäß Fig. 8 und Fig. 9a sowie Fig. 9b.

Im Unterschied zu den Ausführungsformen gemäß Fig. 8 und Fig. 9a sowie Fig. 9b sind jedoch bei der Ausführungsform gemäß Fig. 10 die Linsenmittel 5 und 22 als Gruppe von Linsen ausgeführt. Insbesondere weisen die Linsenmittel 5 jeweils vier Linsen 5a, 5b, 5c, 5d; 22a, 22b, 22c, 22d auf. Diese Linsen 5a, 5b, 5c, 5d; 22a, 22b, 22c, 22d weisen jeweils Paare direkt nebeneinander angeordneter Linsen 5a, 5b; 5c, 5d; 22a, 22b; 22c, 22d auf. Durch diese Paare werden gegenüber einzelnen Linsen an den gleichen Orten Abbildungsfehler vermindert. Weiterhin sind jeweils zwei Paare von Linsen vergleichsweise weit voneinander entfernt, nämlich beispielsweise die Linsen 5a, 5b von den Linsen 5c, 5d. Der Abstand zwischen dem Paar 5a, 5b und dem Paar 5c, 5d ist dabei so gewählt, dass die Fourierebenen der Linsenmittel 5 dicht außerhalb der Linsenmittel 5, 22 angeordnet sind. Dies wird im Nachfolgenden noch näher erläutert.

In Fig. 10 ist weiterhin ein Laser 48 abgebildet. Das von diesem Laser ausgehende Licht wird über zwei Spiegel 49, 50 in eine Aufweitoptik 51 reflektiert. Die Aufweitoptik kann den Laserstrahl des Lasers 48 beispielsweise um einen Faktor 6 aufweiten. Anschließend an die Aufweitoptik 51 tritt das Licht durch eine Aperturblende 52 mit einer kreisförmigen Öffnung von beispielsweise 25 mm in vier erste Arrays (1a₁, 1a₂, 1b₁, 1b₂) von Linsenmitteln ein. Diese Arrays (1a₁, 1a₂, 1b₁, 1b₂) sind ähnlich wie die zweiten Arrays 9a₁, 9a₂, 9b₁, 9b₂ der Ausführungsform gemäß Fig. 9a und Fig. 9b ausgebildet. Bei der Ausführungsform gemäß Fig. 10 sind die Arrays 1a₁ und 1a₂ mit einer Mehrzahl von Zylinderlinsen versehen, deren Zylinderachsen sich in X-Richtung erstrecken. Die sich in Ausbreitungsrichtung des Lichts daran anschließenden Arrays 1b₁ und 1b₂ weisen eine Mehrzahl von Zylinderlinsen auf, deren Zylinderachsen sich in Y-Richtung erstrecken.

Die eingangsseitige Fourierebene der Linsenmittel 5 ist etwa in dem Array 1b₁ angeordnet. Nach Hindurchtritt durch die Linsen 5a und 5b wird das Licht von zwei Spiegeln 53 und 54 auf die Linsen 5c und 5d reflektiert. An die Austrittsfläche der Linse 5d schließt sich das erste der beiden ersten Arrays 3a, 3b von Phasen-Veränderungs-Mitteln an. Dieses Array 3a kann die Phasen des Lichts hinsichtlich der X-Richtung verändern. Zwischen dem ersten der beiden ersten Arrays 3a, 3b von Phasen-Veränderungs-Mitteln und dem zweiten der beiden ersten Arrays 3a, 3b von Phasen-Veränderungs-Mitteln ist ein λ/2-Plättchen 55 vorgesehen, das die Polarisation des Lichts um 90° drehen kann. Dies deshalb, weil die Arrays von Phasen-Veränderungs-Mitteln polarisationsabhängig sein können. Das zweite Array 3b der beiden ersten Arrays 3a, 3b von Phasen-Veränderungs-Mitteln kann die Phasen des Lichts hinsichtlich der Y-Richtung verändern. Die ausgangsseitige Fourierebene der Linsenmittel 5 ist etwa in dem λ/2-Plättchen 55 angeordnet.

In dem λ/2-Plättchen 55 ist auch die eingangsseitige Fourierebene der zweiten Linsenmittel 22 angeordnet, die sich in Ausbreitungsrichtung des Lichts an das Array 3b anschließen. Wie bei den Linsenmitteln 5 wird bei den Linsenmitteln 22 nach Hindurchtritt durch die Linsen 22a, 22b das Licht über zwei Spiegel 56, 57 auf die Linsen 22c und 22d reflektiert. An die Linsenmittel 22 schließen sich die zweiten Arrays 9a₁, 9a₂, 9b₁, 9b₂ von Linsenmitteln und die zweiten Arrays 11a, 11 b von Phasen-Veränderungs-Mitteln an, die im Wesentlichen so ausgeführt sind, wie die bei der Ausführungsform gemäß Fig. 9a und Fig. 9b. Dabei sind die Arrays 9a₁ und 9a₂ mit einer Mehrzahl von Zylinderlinsen versehen, deren Zylinderachsen sich in X-Richtung erstrecken. Die sich in Ausbreitungsrichtung des Lichts daran anschließenden Arrays 9b₁ und 9b₂ weisen eine Mehrzahl von Zylinderlinsen auf, deren Zylinderachsen sich in Y-Richtung erstrecken. Zwischen den zweiten Arrays 9a₁ und 9a₂ sowie zwischen den zweiten Arrays 9b₁ und 9b₂ von Linsenmitteln ist jeweils eines der zweiten Arrays 11a, 11 b von Phasen-Veränderungs-Mitteln angeordnet. Weiterhin ist zwischen den Arrays 9a₂ und 9b₁ ein λ/2-Plättchen 58 vorgesehen, das die Polarisation des Lichts um 90° dreht. Die ausgangsseitige Fourierebene der Linsenmittel 22 ist in diesem λ/2-Plättchen 22 angeordnet.

Die zweifache Fouriertransformation durch die Linsenmittel 5, 22 ergibt hinsichtlich der X-Richtung eine Abbildung von einer Objektebene, die im Bereich der Austrittsfläche des Arrays 1b₂ angeordnet ist, in eine Bildebene, die im Bereich der Austrittsfläche des Arrays 9b₁ angeordnet ist. Die zweifache Fouriertransformation durch die Linsenmittel 5, 22 ergibt hinsichtlich der Y-Richtung eine Abbildung von einer Objektebene, die im Bereich der Austrittsfläche des Arrays 1a₂ angeordnet ist, in eine Bildebene, die im Bereich der Austrittsfläche des Arrays 9a₁ angeordnet ist.

Nach Hindurchtritt durch eine weitere Aperturblende 59 gelangt das Licht in eine Reduktionsoptik 60, die den Durchmesser des beeinflussten Lichtstrahls 61 beispielsweise um einen Faktor 6 reduzieren kann. Der aus der Reduktionsoptik 60 austretende Lichtstrahl kann durch die erfindungsgemäße Vorrichtung beispielsweise um bis zu ± 10° abgelenkt werden.

Wenn größere Ablenkwinkel erwünscht werden oder wenn eine größere Auflösung erwünscht wird, können zwei oder mehrere Vorrichtungen hintereinander positioniert werden.

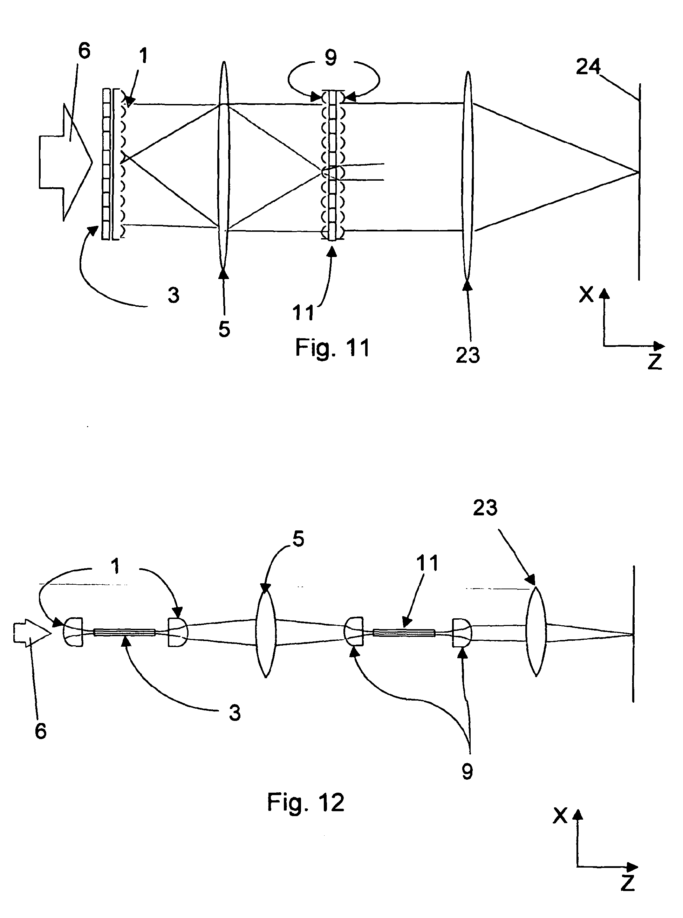

Die im Folgenden im Zusammenhang mit den Fig. 11 bis 17 beschriebenen Ausführungsformen umfassen Vorrichtung zur Beeinflussung von Licht und deren Anwendungen, die zwar nicht der erfindungsgemäßen Vorrichtung entsprechen, aber trotzdem das Verständnis der Erfindung erleichtern können.

Die Vorrichtung gemäß Fig. 11 umfasst ein weiteres Linsenmittel 23, das hinter dem zweiten Array 9 von Linsenmitteln 10 angeordnet ist und das austretende Licht in eine Arbeitsebene fokussieren kann. In dieser Arbeitsebene kann beispielsweise eine Projektionsfläche für ein Laserfernsehen oder ein Speichermedium für einen optischen Datenspeicher angeordnet sein. Das Auflösungsvermögen einer erfindungsgemäßen Vorrichtung ergibt sich dabei insbesondere als Produkt der Anzahlen N₁ und N₂ der Linsenmittel 2, 10 in den beiden Arrays 1, 9.

Fig. 12 zeigt eine Anordnung, bei der sowohl das erste Array 1 von Linsenmitteln 2, als auch das zweite Array 9 von Linsenmitteln 10 zweistufig ausgeführt sind. Dabei können beispielsweise die Zylinderachsen der Linsenelemente auf dem jeweils ersten Substrat senkrecht zu den Zylinderachsen der Linsenelemente auf dem jeweils zweiten Substrat ausgerichtet sein. Weiterhin besteht die Möglichkeit, dass auf einem der Substrate nur eine einfache Zylinderlinse angeordnet ist, wobei auf dem jeweils anderen Substrat ein Array von Zylinderlinsen angeordnet ist.

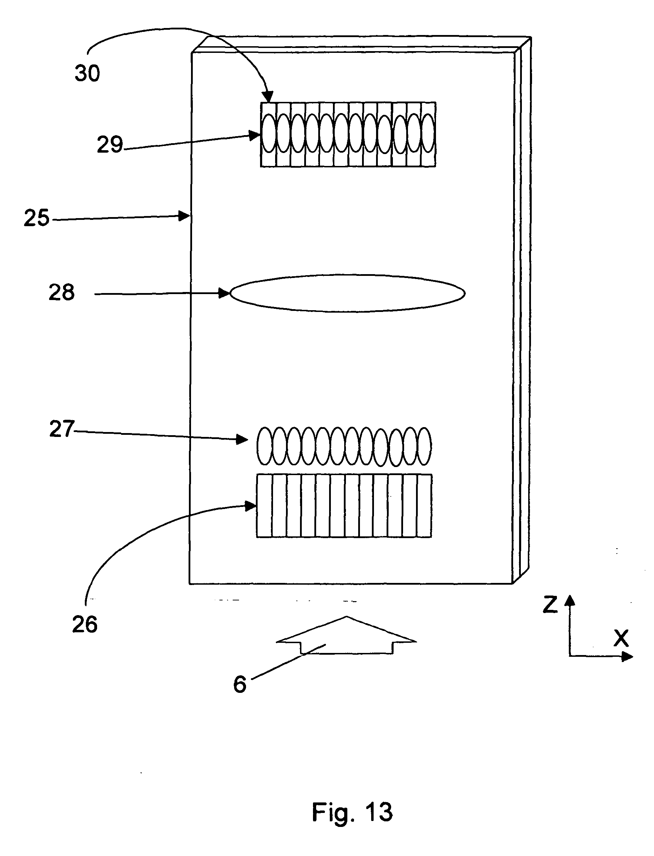

Fig. 13 zeigt eine Ausbildung der Vorrichtung als integrierte Optik. Auf einem Substrat 25 mit einer Wellenleiterschicht ein erstes und ein zweites Array 26, 30 von Phasen-Veränderungs-Mitteln beispielsweise als elektrooptische Modulatoren ausgebildet. Das erste und das zweite Array 27, 29 von Linsenmitteln umfassen als Linsenmittel geodätische Linsen. Auch das erste als Fouriertransformationselement dienende Linsenmittel 28 ist als geodätische Linse ausgebildet.

Fig. 14 zeigt in perspektivischer Ansicht eine Vorrichtung mit zueinander gekreuzten Zylinderlinsen auf dem ersten und dem zweiten Array 31, 34 von Linsenmitteln. Insbesondere erstrecken sich auf den jeweiligen Eintrittsflächen der Arrays 31, 34 die Zylinderachsen in Y-Richtung, wohingegen sich auf den jeweiligen Austrittsflächen der Arrays 31, 34 die Zylinderachsen in X-Richtung erstrecken. Die Arrays 32, 33 von Phasen-Veränderungs-Mitteln sind als zweidimensionale Anordnungen von Modulatoren ausgebildet.

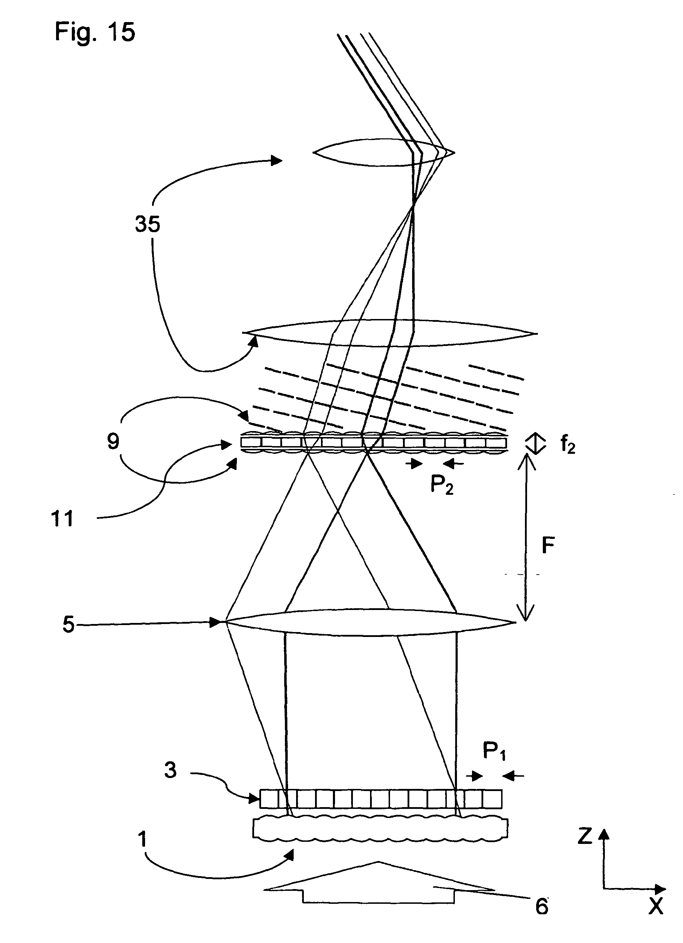

Die Ausführungsform gemäß Fig. 15 weist im Unterschied zur Ausführungsform gemäß den Fig. 1 bis 4 hinter dem zweiten Array 9 von Linsenmitteln 10 ein Teleskop 35 auf, um das austretende Lichtbündel hinsichtlich seines Querschnitts zu verkleinern.

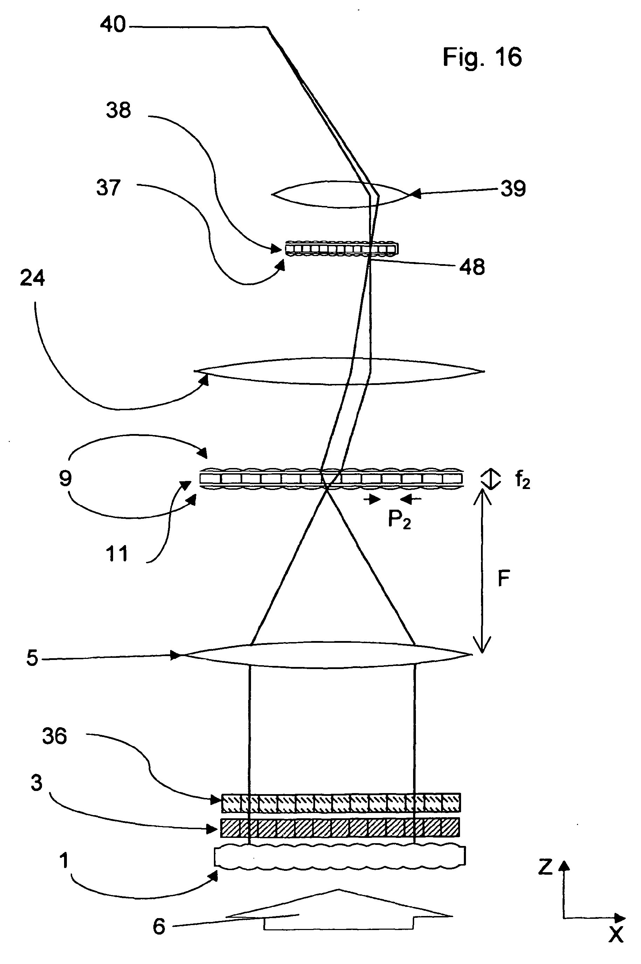

Die Ausführungsform gemäß Fig. 16 weist wie die Vorrichtung gemäß Fig. 11 ein weiteres Linsenmittel 24 auf, das hinter dem zweiten Array 9 von Linsenmitteln 10 angeordnet ist. Im Unterschied zur Ausführungsform gemäß Fig. 11 ist bei der gemäß Fig. 16 kurz hinter der Brennebene dieses Linsenmittels 24 ein drittes Array 37 von Linsenmitteln angeordnet, das wie das erste und/oder das zweite Array 1, 9 ausgebildet sein kann. Weiterhin ist in diesem Bereich auch ein drittes Array 38 von Phasen-Veränderungs-Mitteln angeordnet, das ebenfalls wie das erste und/oder das zweite Array 3, 11 ausgebildet sein kann. Zusätzlich benachbart zu dem ersten Array 3 von Phasen-Veränderungs-Mitteln kann ein weiteres Array 36 von Phasen-Veränderungs-Mitteln angeordnet sein, das die Intensität des durch die einzelnen Phasen-Veränderungs-Mittel hindurch tretenden Lichts beeinflussen kann. Zusätzlich ist optional hinter dem dritten Array 37 von Linsenmitteln ein weiteres Linsenmittel 39 angeordnet, das zur Fokussierung des austretenden Lichts in einen Fokusbereich 40 beitragen kann.

Durch die dritten Arrays 37 von Linsenmitteln und die dritten Arrays 38 von Phasen-Veränderungs-Mitteln kann der Ablenkwinkel oder die Auflösung der Ablenkung erhöht werden, wie dies bereits im Zusammenhang mit Fig. 10 für zwei hintereinander angeordnete Vorrichtungen erläutert wurde. In der nachfolgenden Diskussion sollen zur Vereinfachung das erste Array 1 von Linsenmitteln und das erste Array 3 von Phasen-Veränderungs-Mitteln als erste Stufe, das zweite Array 9 von Linsenmitteln und das zweite Array 11 von Phasen-Veränderungs-Mitteln als zweite Stufe sowie das dritte Array 37 von Linsenmitteln und das dritte Array 38 von Phasen-Veränderungs-Mitteln als dritte Stufe bezeichnet werden.

Beispielsweise kann das erste Array 1 von Linsenmitteln zehn Linsen mit einer numerischen Apertur NA = 0,01 und einem Pitch von 0,5 mm aufweisen. Das erste als Fourierlinse dienende Linsenmittel 5 kann eine Brennweite von 0,5 m aufweisen. Das zweite Array 9 von Linsenmitteln kann zehn Linsen mit einer numerischen Apertur NA = 0,1 und einem Pitch von 0,5 mm aufweisen. Das zweite als Fourierlinse dienende Linsenmittel 24 kann eine Brennweite von 0,05 m aufweisen. Das dritte Array 37 von Linsenmitteln kann zehn Linsen mit einer numerischen Apertur NA = 0,1 und einem Pitch von 0,5 mm aufweisen.

Eine in die erste Stufe eintretender Lichtstrahl, der beispielsweise als ebene Welle mit einer Wellenlänge von 0,5 µm und einem Durchmesser von 5mm ausgebildet ist, wird durch die erste Stufe in 10 ebene Wellen mit einer Ausbreitungsdifferenz von 1 mrad aufgeteilt. Am Ausgang der zweiten Stufe liegen 10 ebene Wellen mit einer Ausbreitungsdifferenz von 10 mrad vor. Erst die dritte Stufe fasst die ebenen Wellen wieder zusammen, so dass am Ausgang der dritten Stufe ein Lichtstrahl mit einem Durchmesser von 5 mm und einer beugungsbegrenzten Divergenz von 0,1 mrad austritt. Der Bereich, in den der Lichtstrahl abgelenkt werden kann, beträgt 100 mrad. Die Anzahl der aufgelösten Ausbreitungsrichtungen in diesem Bereich ist 1000. Durch die zusätzliche dritte Stufe kann somit einerseits der maximale Ablenkungswinkel und/oder andererseits die Auflösung der Ablenkung erhöht werden.

Erfindungsgemäß besteht auch die Möglichkeit mehr als drei Stufen vorzusehen, um den Ablenkwinkel und/oder die Auflösung weiter zu erhöhen.

Weiterhin können auch durch die Erhöhung der Anzahl der Stufen die Anforderungen an das Signal-Rausch-Verhältnis für das Ansteuersignal der Arrays der Phasen-Veränderungs-Mittel gesenkt werden. Beispielsweise kann bei einer mehrstufigen Vorrichtung eine Stufe durch zwei Stufen ersetzt werden. Wenn in einer Stufe zwischen 100 verschiedenen Ablenkwinkeln geschaltet werden soll, muss eine Signal-Rausch-Verhältnis von 100:1 vorliegen. Wenn jedoch diese Aufgabe auf zwei Stufen aufgeteilt wird, muss in jeder Stufe nur zwischen 10 verschiedenen Ablenkwinkeln geschaltet werden, so dass sich das benötigte Signal-Rausch-Verhältnis auf 10:1 reduziert.

Es besteht auch bei der Ausführungsform gemäß Fig. 16 die Möglichkeit, analog zu den Ausführungsformen gemäß Fig. 8, Fig. 9a, Fig. 9b und Fig. 10 beispielsweise in der ersten und/oder in der zweiten und/oder in der dritten Stufe mindestens zwei als Fouriertransformationselemente dienende Linsenmittel zwischen den einzelnen Arrays von Linsenmitteln anzuordnen, wobei dann jeweils im Bereich der gemeinsamen Fourierebene dieser Linsenmittel mindestens ein Array von Phasen-Veränderungs-Mitteln angeordnet werden kann. Diese aus Fig. 8, Fig. 9a, Fig. 9b und Fig. 10 ersichtliche Anordnung der als Fouriertransformationselemente dienenden Linsenmittel ist auch bei mehr als drei Stufen möglich.

Bei der Vorrichtung gemäß Fig. 16 kann der Abstand der Intensitätsmaxima 48 zueinander vor dem dritten Array 37 von Linsenmitteln verändert werden. Auf diese Weise lässt sich der Abstand des Fokusbereichs 40 von der Vorrichtung verändern. Dadurch kann beispielsweise optische Datenspeicherung im Volumen oder ein dreidimensionales Laserfernsehen ermöglicht werden.

Es besteht die Möglichkeit, zwei erfindungsgemäße Vorrichtungen, beispielsweise wie die in Fig. 8, hintereinander anzuordnen, wobei die zweite gegenüber der ersten um 90° gedreht ist. Dadurch kann zuerst eine Beeinflussung beziehungsweise Ablenkung des Lichts 6 in X-Richtung und danach in Y-Richtung ermöglicht werden.

Es besteht weiterhin die Möglichkeit, dass anstelle einer ebenen Welle eine Mehrzahl von ebenen Wellen aus unterschiedlichen Richtung in eine erfindungsgemäße Vorrichtung einfallen und in dieser unabhängig voneinander beeinflusst werden.

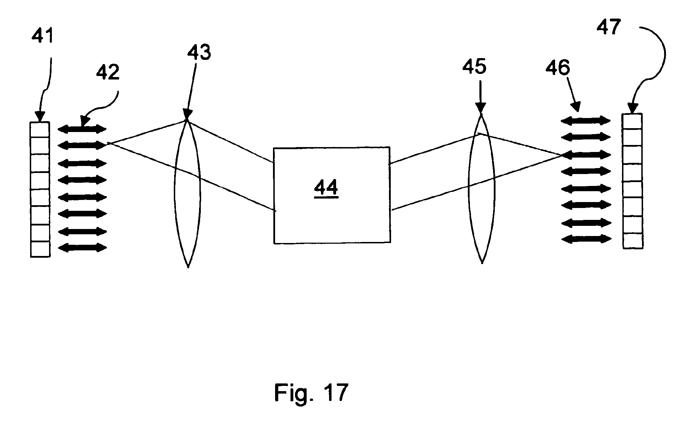

Fig. 17 zeigt eine Anwendung als bidirektionaler Kommutator beziehungsweise als bidirektionaler Verbinder zwischen zwei optischen mehrkanaligen Datenleitungen. Mit den Bezugszeichen 41 und 47 sind elektrooptische Modulatoren oder Pockelszellen zur Intensitätsbeeinflussung der einzelnen Kanäle 42, 46 bezeichnet. Mit 44 ist eine geeignete Ausführungsform einer erfindungsgemäßen Vorrichtung bezeichnet. Die Einkopplung des Lichts in die Vorrichtung 44 beziehungsweise in die einzelnen Kanäle 42, 46 erfolgt über Linsenmittel 43, 45.

## Patentansprüche

1. Vorrichtung zur Beeinflussung von Licht (6), umfassend
- ein erstes Array (1, 1a, 1b, 1a₁, 1a₂, 1b₁, 1b₂) von Linsenmitteln (2), durch die das zu beeinflussende Licht (6) zumindest teilweise hindurch treten kann;
- ein erstes Array (3, 3a, 3b) von Phasen-Veränderungs-Mitteln (4), die die Phasen des Lichts (6) verändern können, das durch die einzelnen Linsenmittel (2) des ersten Arrays (1, 1a, 1b, 1a₁, 1a₂, 1b₁, 1b₂) von Linsenmitteln (2) hindurch getreten ist;
- ein zweites Array (9, 9a, 9b, 9a₁, 9a₂, 9b₁, 9b₂) von Linsenmitteln (10), durch die das durch das erste Array (3, 3a, 3b) von Phasen-Veränderungs-Mitteln (4) hindurch getretene Licht zumindest teilweise hindurch treten kann, wobei das zweite Array (9, 9a, 9b, 9a₁, 9a₂, 9b₁, 9b₂) von Linsenmitteln (10) derart in der Vorrichtung angeordnet ist, dass in Ausbreitungsrichtung (Z) des zu beeinflussenden Lichts (6) vor dem zweiten Array (9, 9a, 9b, 9a₁, 9a₂, 9b₁, 9b₂) von Linsenmitteln (10) oder im Bereich des zweiten Arrays (9, 9a, 9b, 9a₁, 9a₂, 9b₁, 9b₂) von Linsenmitteln (10) eine Mehrzahl von lokalen Intensitätsmaxima (17) des zu beeinflussenden Lichts (6) entstehen kann;
- erste Linsenmittel (5), die zwischen dem ersten Array (1, 1a, 1b, 1a₁, 1a₂, 1b₁, 1b₂) von Linsenmitteln (2) und dem zweiten Array (9, 9a, 9b, 9a₁, 9a₂, 9b₁, 9b₂) von Linsenmitteln (10) angeordnet sind, wobei das erste Array (3, 3a, 3b) von Phasen-Veränderungs-Mitteln (4) in Ausbreitungsrichtung (Z) des zu beeinflussenden Lichts (6) hinter den ersten Linsenmitteln (5) angeordnet ist
**dadurch gekennzeichnet, dass**
- die Vorrichtung zweite Linsenmittel (22) umfasst, die zwischen den ersten Linsenmitteln (5) und dem zweiten Array (9, 9a, 9b, 9a₁, 9a₂, 9b₁, 9b₂) von Linsenmitteln (10) angeordnet sind, wobei
- das erste Array (3, 3a, 3b) von Phasen-Veränderungs-Mitteln (4) zwischen den ersten Linsenmitteln (5) und den zweiten Linsenmitteln (22) angeordnet ist, wobei
- die ersten Linsenmittel (5) und die zweiten Linsenmittel (22) derart in der Vorrichtung angeordnet sind, dass sie das zu beeinflussende Licht (6) fouriertransformieren können und wobei
- das erste Array (3, 3a, 3b) von Phasen-Veränderungs-Mitteln (4) in oder im Bereich der ausgangsseitigen Fourierebene der ersten Linsenmittel (5) und in oder im Bereich der eingangsseitigen Fourierebene der zweiten Linsenmittel (22) angeordnet ist.

2. Vorrichtung nach Anspruch 1, **dadurch gekennzeichnet, dass** die ausgangsseitige Brennebene des ersten Arrays (1, 1a, 1b, 1a₁, 1a₂, 1b₁, 1b₂) von Linsenmitteln (2) der eingangsseitigen Fourierebene der ersten Linsenmittel (5) entspricht oder im Bereich der eingangsseitigen Fourierebene der ersten Linsenmittel (5) angeordnet ist.

3. Vorrichtung nach einem der Ansprüche 1 oder 2, **dadurch gekennzeichnet, dass** die eingangsseitige Brennebene des zweiten Arrays (9, 9a, 9b, 9a₁, 9a₂, 9b₁, 9b₂) von Linsenmitteln (10) der ausgangsseitigen Fourierebene der zweiten Linsenmittel (22) entspricht oder im Bereich der ausgangsseitigen Fourierebene der zweiten Linsenmittel (22) angeordnet ist.

4. Vorrichtung nach einem der Ansprüche 1 bis 3, **dadurch gekennzeichnet, dass** die ersten Linsenmittel (5) und die zweiten Linsenmittel (22) ein Teleskop oder eine teleskopähnliche Anordnung bilden.

5. Vorrichtung nach einem der Ansprüche 1 bis 4, **dadurch gekennzeichnet, dass** die ersten Linsenmittel (5) und die zweiten Linsenmittel (22) ein telezentrisches System bilden.

6. Vorrichtung nach einem der Ansprüche 1 bis 5, **dadurch gekennzeichnet, dass** die ersten Linsenmittel (5) und die zweiten Linsenmittel (22) derart angeordnet sind, dass die ausgangsseitige Brennebene der ersten Linsenmittel (5) und die eingangsseitige Brennebene der zweiten Linsenmittel (22) einander entsprechen oder etwa im gleichen Bereich angeordnet sind.

7. Vorrichtung nach einem der Ansprüche 1 bis 6, **dadurch gekennzeichnet, dass** die ersten Linsenmittel (5) und/oder die zweiten Linsenmittel (22) eine Mehrzahl von Linsen (5a, 5b, 5c, 5d; 22a, 22b, 22c, 22d) umfassen.

8. Vorrichtung nach einem der Ansprüche 1 bis 7, **dadurch gekennzeichnet, dass** das erste Array (1, 1a, 1b, 1a₁ 1a₂, 1b₁, 1b₂) von Linsenmitteln (2) und/oder das zweite Array (9, 9a, 9b, 9a₁, 9a₂, 9b₁, 9b₂) von Linsenmitteln (10) eine erste und eine zweite optisch funktionale Grenzfläche aufweist, die in Ausbreitungsrichtung (Z) des zu beeinflussenden Lichts (6) beabstandet zueinander sind, wobei auf jeder der Grenzflächen ein Array von Linsenelementen ausgebildet ist.

9. Vorrichtung nach Anspruch 8, **dadurch gekennzeichnet, dass** der Abstand zwischen der ersten und der zweiten optisch funktionalen Grenzfläche des ersten Arrays (1, 1a, 1b, 1a₁, 1a₂, 1b₁, 1b₂) von Linsenmitteln (2) und/oder des zweite Arrays (9, 9a, 9b, 9a₁, 9a₂, 9b₁, 9b₂) von Linsenmitteln (10) in Ausbreitungsrichtung (Z) des zu beeinflussenden Lichts (6) der Brennweite (f₁) der Linsenelemente der ersten und/oder der zweiten optisch funktionalen Grenzfläche entspricht.

10. Vorrichtung nach einem der Ansprüche 1 bis 9, **dadurch gekennzeichnet, dass** die Vorrichtung ein zweites Array (11, 11a, 11 b) von Phasen-Veränderungs-Mitteln (12) umfasst, das in Ausbreitungsrichtung (Z) des zu beeinflussenden Lichts (6) vor oder hinter dem zweiten Array (9, 9a, 9b, 9a₁, 9a₂, 9b₁, 9b₂) von Linsenmitteln (10) oder im Bereich des zweiten Arrays (9, 9a, 9b, 9a₁, 9a₂, 9b₁, 9b₂) von Linsenmitteln (10) angeordnet ist.

11. Vorrichtung nach einem der Ansprüche 1 bis 10, **dadurch gekennzeichnet, dass** durch verschiedene Phasen-Veränderungs-Mittel (4; 12) des ersten und/oder des zweiten Arrays (3, 3a, 3b; 11, 11a, 11b) von Phasen-Veränderungs-Mitteln (4; 12) hindurch tretende Teile des zu beeinflussenden Lichts (6) in den Phasen-Veränderungs-Mittein (4; 12) eine voneinander verschiedene Änderung ihrer Phase erfahren können.

12. Vorrichtung nach einem der Ansprüche 8 bis 11, **dadurch gekennzeichnet, dass** das erste Array (3, 3a, 3b) von Phasen-Veränderungs-Mitteln (4) in Ausbreitungsrichtung (Z) des zu beeinflussenden Lichts (6) zwischen den beiden optisch funktionalen Grenzflächen des ersten Arrays (1, 1a, 1b, 1a₁, 1a₂, 1b₁, 1b₂) von Linsenmitteln (2) angeordnet ist und/oder dass das zweite Array (11, 11a, 11 b) von Phasen-Veränderungs-Mitteln (12) in Ausbreitungsrichtung (Z) des zu beeinflussenden Lichts (6) zwischen den beiden optisch funktionalen Grenzflächen des zweiten Arrays (9, 9a, 9b, 9a₁, 9a₂, 9b₁, 9b₂) von Linsenmitteln (10) angeordnet ist.

13. Vorrichtung nach einem der Ansprüche 1 bis 12, **dadurch gekennzeichnet, dass** die Vorrichtung mindestens ein weiteres Array (37) von Linsenmitteln umfasst, durch die das durch das zweite Array (9, 9a, 9b, 9a₁, 9a₂, 9b₁, 9b₂) von Linsenmitteln (10) hindurch getretene Licht zumindest teilweise hindurch treten kann, wobei das mindestens eine weitere Array (37) von Linsenmitteln derart in der Vorrichtung angeordnet ist oder die Vorrichtung derart gestaltet ist, dass in Ausbreitungsrichtung (Z) des zu beeinflussenden Lichts (6) vor dem mindestens einen weiteren Array (37) von Linsenmitteln oder im Bereich des mindestens einen weiteren Arrays (37) von Linsenmitteln eine Mehrzahl von lokalen Intensitätsmaxima (48) des zu beeinflussenden Lichts (6) entstehen kann.

14. Vorrichtung nach Anspruch 13, **dadurch gekennzeichnet, dass** die Vorrichtung weitere Linsenmittel (24) umfasst, die zwischen dem zweiten Array (9, 9a, 9b, 9a₁, 9a₂, 9b₁, 9b₂) von Linsenmitteln (10) und dem mindestens einen weiteren Array (37) von Linsenmitteln angeordnet sind.

15. Vorrichtung nach Anspruch 14, **dadurch gekennzeichnet, dass** die ausgangsseitige Brennebene der Linsenmittel des zweiten Arrays (9, 9a, 9b, 9a₁, 9a₂, 9b₁, 9b₂) von Linsenmitteln (10) der eingangsseitigen Brennebene oder Fourierebene der weiteren Linsenmittel (24) entspricht oder im Bereich der eingangsseitigen Brennebene oder Fourierebene der weiteren Linsenmittel (24) angeordnet ist.

16. Vorrichtung nach einem der Ansprüche 13 bis 15, **dadurch gekennzeichnet, dass** die Vorrichtung mindestens ein weiteres Array (38) von Phasen-Veränderungs-Mitteln umfasst, das in Ausbreitungsrichtung (Z) des zu beeinflussenden Lichts (6) vor oder hinter dem mindestens einen weiteren Array (37) von Linsenmitteln oder im Bereich des mindestens einen weiteren Arrays (37) von Linsenmitteln angeordnet ist.

17. Vorrichtung nach einem der Ansprüche 1 bis 16, **dadurch** gekenntzeichnet, dass die Vorrichtung ein Linsenmittel (23, 39) umfasst, das in Ausbreitungsrichtung (Z) des zu beeinflussenden Lichts (6) hinter dem zweiten Array (9, 9a, 9b, 9a₁, 9a₂, 9b₁, 9b₂) von Linsenmitteln (10) oder hinter dem mindestens einen weiteren Array (37) von Linsenmitteln angeordnet ist.

18. Vorrichtung nach einem der Ansprüche 1 bis 17, **dadurch** gekenntzeichnet, dass die Vorrichtung ein Teleskop (35) umfasst, das in Ausbreitungsrichtung (Z) des zu beeinflussenden Lichts (6) hinter dem zweiten Array (9, 9a, 9b, 9a₁, 9a₂, 9b₁, 9b₂) von Linsenmitteln (10) oder hinter dem mindestens einen weiteren Array (37) von Linsenmitteln angeordnet ist.

19. Vorrichtung nach einem der Ansprüche 1 bis 18, **dadurch gekennzeichnet, dass** die Linsenmittel (2) des ersten Arrays (1, 1a, 1b, 1a₁, 1a₂, 1b₁, 1b₂) von Linsenmitteln (2) und/oder die Linsenmittel des zweiten Arrays (9, 9a, 9b, 9a₁, 9a₂, 9b₁, 9b₂) von Linsenmitteln (10) und/oder die Linsenmittel des mindestens einen weiteren Arrays (37) von Linsenmitteln als Zylinderlinsen ausgebildet sind.

20. Vorrichtung nach Anspruch 19, **dadurch gekennzeichnet, dass** die Zylinderachsen der auf der ersten und auf der zweiten optisch funktionalen Grenzfläche angeordneten Linsenelemente des ersten Arrays (1, 1a, 1b, 1a₁, 1a₂, 1b₁, 1b₂) von Linsenmitteln (2) und/oder des zweiten Arrays (9, 9a, 9b, 9a₁, 9a₂, 9b₁, 9b₂) von Linsenmitteln (10) und/oder des mindestens einen weiteren Arrays (37) von Linsenmitteln senkrecht oder parallel zueinander ausgerichtet sind.

21. Vorrichtung nach einem der Ansprüche 1 bis 20, **dadurch gekennzeichnet, dass** eines oder mehrere der Arrays (27, 29) von Linsenmitteln und/oder eines oder mehrere der Arrays (26, 30) von Phasen-Veränderungs-Mitteln und/oder eines oder mehrere der Linsenmittel (28) als integrierte optische Bauteile ausgebildet sind.

22. Vorrichtung nach einem der Ansprüche 1 bis 21, **dadurch gekennzeichnet, dass** die Linsenmittel (28) eines oder mehrerer der Arrays (27, 29) von Linsenmitteln als geodätische Linsen ausgebildet sind.

23. Vorrichtung nach einem der Ansprüche 1 bis 22, **dadurch gekennzeichnet, dass** die Phasen-Veränderungs-Mittel (4, 12) eines oder mehrerer der Arrays (3, 3a, 3b, 11, 11 a, 11 b) von Phasen-Veränderungs-Mitteln als elektrooptische Modulatoren oder akustooptische Modulatoren oder als flüssigkristallbasierte Modulatoren ausgebildet sind.

24. Verwendung einer Vorrichtung nach einem der Ansprüche 1 bis 23, **dadurch gekennzeichnet, dass** die Vorrichtung als Strahlablenkung verwendet wird.

25. Verwendung nach Anspruch 24, **dadurch gekennzeichnet, dass** die Vorrichtung im Bereich Laserfernsehen Verwendung findet.

26. Verwendung nach Anspruch 24, **dadurch gekennzeichnet, dass** die Vorrichtung im Bereich optische Datenspeicherung Verwendung findet.

27. Verwendung einer Vorrichtung nach einem der Ansprüche 1 bis 23, **dadurch gekennzeichnet, dass** die Vorrichtung als Kommutator verwendet wird.

## Claims

1. Device for influencing light (6), comprising
- a first array (1, 1a, 1b, 1a₁, 1a₂, 1b₁, 1b₂) of lens means (2), through which the light (6) to be influenced can pass at least partially;
- a first array (3, 3a, 3b) of phase-modifying means (4), which can modify the phases of the light (6) which has passed through the individual lens means (2) of the first array (1, 1a, 1b, 1a₁, 1a₂, 1b₁, 1b₂) of lens means (2);
- a second array (9, 9a, 9b, 9a, 9a₂, 9b₁, 9b₂) of lens means (10), through which the light having passed through the first array (3, 3a, 3b) of phase-modifying means (4) can pass at least partially, the second array (9, 9a, 9b, 9a₁, 9a₂, 9b₁, 9b₂) of lens means (10) being arranged in the device so that a multiplicity of local intensity maxima (17) of the light (6) to be influenced can be created before the second array (9, 9a, 9b, 9a₁, 9a₂, 9b₁, 9b₂) of lens means (10) in the propagation direction (Z) of the light to be influenced (6) or in the region of the second array (9, 9a, 9b, 9a₁, 9a₂, 9b₁, 9b₂) of lens means (10);
- first lens means (5), which are arranged between the first array (1, 1a, 1b, 1a₁, 1a₂, 1b₁, 1b₂) of lens means (2) and the second array (9, 9a, 9b, 9a₁, 9a₂, 9b₁, 9b₂) of lens means (10), the first array (3, 3a, 3b) of phase-modifying means (4) being arranged after the first lens means (5) in the propagation direction (Z) of the light (6) to be influenced,
**characterized in that**
- the device comprises second lens means (22), which are arranged between the first lens means (5) and the second array (9, 9a, 9b, 9a₁, 9a₂, 9b₁, 9b₂) of lens means (10),
- the first array (3, 3a, 3b) of phase-modifying means (4) being arranged between the first lens means (5) and the second lens means (22),
- the first lens means (5) and the second lens means (22) being arranged in the device so that they can Fourier transform the light (6) to be influenced and
- the first array (3, 3a, 3b) of phase-modifying means (4) being arranged in or in the region of the output-side Fourier plane of the first lens means (5) and in or in the region of the input-side Fourier plane of the second lens means (22).

2. Device according to Claim 1, **characterized in that** the output-side focal plane of the first array (1, 1a, 1b, 1a₁, 1a₂, 1b₁, 1b₂) of lens means (2) corresponds to the input-side Fourier plane of the first lens means (5) or is arranged in the region of the input-side Fourier plane of the first lens means (5).

3. Device according to either of Claims 1 and 2, **characterized in that** the input-side focal plane of the second array (9, 9a, 9b, 9a₁, 9a₂, 9bi, 9b₂) of lens means (10) corresponds to the output-side Fourier plane of the second lens means (22) or is arranged in the region of the output-side Fourier plane of the second lens means (22).

4. Device according to one of Claims 1 to 3, **characterized in that** the first lens means (5) and the second lens means (22) form a telescope or an arrangement similar to a telescope.

5. Device according to one of Claims 1 to 4, **characterized in that** the first lens means (5) and the second lens means (22) form a telecentric system.

6. Device according to one of Claims 1 to 5, **characterized in that** the first lens means (5) and the second lens means (22) are arranged so that the output-side focal plane of the first lens means (5) and the input-side focal plane of the second lens means (22) correspond to each other or are arranged approximately in the same region.

7. Device according to one of Claims 1 to 6, **characterized in that** the first lens means (5) and/or the second lens means (22) comprise a multiplicity of lenses (5a, 5b, 5c, 5d; 22a, 22b, 22c, 22d).

8. Device according to one of Claims 1 to 7, **characterized in that** the first array (1, 1a, 1b, 1a₁, 1a₂, 1b₁, 1b₂) of lens means (2) and/or the second array (9, 9a, 9b, 9a₁, 9a₂, 9b₁, 9b₂) of lens means (10) comprises a first and a second optically functional interface, which are spaced apart from each other in the propagation direction (z) of the light (6) to be influenced, an array of lens elements being formed on each of the interfaces.

9. Device according to Claim 8, **characterized in that** the spacing between the first and second optically functional interfaces of the first array (1, 1a, 1b, 1a₁, 1a₂, 1b₁, 1b₂) of lens means (2) and/or of the second array (9, 9a, 9b, 9a₁, 9a₂, 9b_{1,} 9b₂) of lens means (10) in the propagation direction (z) of the light (6) to be influenced corresponds to the focal length (f₁) of the lens elements of the first and/or second optically functional interface.

10. Device according to one of Claims 1 to 9, **characterized in that** the device comprises a second array (11, 11a, 11b) of phase-modifying means (12), which is arranged before or after the second array (9, 9a, 9b, 9a₁, 9a₂, 9b₁, 9b₂) of lens means (10) in the propagation direction (z) of the light (6) to be influenced or in the region of the second array (9, 9a, 9b, 9a₁, 9a₂, 9b₁, 9b₂) of lens means (10).

11. Device according to one of Claims 1 to 10, **characterized in that** parts of the light (6) to be influenced which pass through different phase-modifying means (4; 12) of the first and/or second array (3, 3a, 3b; 11, 11a, 11b) of phase-modifying means (4; 12) can experience a different change of their phase from one another in the phase-modifying means (4; 12).

12. Device according to one of Claims 8 to 11, **characterized in that** the first array (3, 3a, 3b) of phase-modifying means (4) is arranged between the two optically functional interfaces of the first array (1, 1a, 1b, 1a₁, 1a₂, 1b₁, 1b₂) of lens means (2) in the propagation direction (z) of the light (6) to be influenced and/or **characterized in that** the second array (11, 11a, 11b) of phase-modifying means (12) is arranged between the two optically functional interfaces of the second array (9, 9a, 9b, 9a₁, 9a₂, 9b₁, 9b₂) of lens means (10) in the propagation direction (Z) of the light (6) to be influenced.

13. Device according to one of Claims 1 to 12, **characterized in that** the device comprises at least one further array (37) of lens means, through which the light having passed through the second array (9, 9a, 9b, 9a₁, 9a₂, 9b₁, 9b₂) of lens means (10) can pass at least partially, the at least one further array (37) of lens means being arranged in the device or configured in the device so that a multiplicity of local intensity maxima (48) of the light (6) to be influenced can be created before the at least one further array (37) of lens means in the propagation direction (Z) of the light (6) to be influenced or in the region of the at least one further array (37) of lens means.

14. Device according to Claim 13, **characterized in that** the device comprises a further lens means (24), which are arranged between the second array (9, 9a, 9b, 9a₁, 9a₂, 9b₁, 9b₂) of lens means (10) and the at least one further array (37) of lens means.

15. Device according to Claim 14, **characterized in that** the output-side focal plane of the lens means of the second array (9, 9a, 9b, 9a₁, 9a₂, 9b₁, 9b₂) of lens means (10) corresponds to the input-side focal plane or Fourier plane of the further lens means (24) or is arranged in the region of the input-side focal plane or Fourier plane of the further lens means (24).

16. Device according to one of Claims 13 to 15, **characterized in that** the device comprises at least one further array (38) of phase-modifying means, which is arranged before or after the at least one further array (37) of lens means in the propagation direction (Z) of the light (6) to be influenced or in the region of the at least one further array (37) of lens means.

17. Device according to one of Claims 1 to 16, **characterized in that** the device comprises a lens means (23, 39), which is arranged after the second array (9, 9a, 9b, 9a₁, 9a₂, 9b₁, 9b₂) of lens means (10) or after the at least one further array (37) of lens means in the propagation direction (Z) of the light (6) to be influenced.

18. Device according to one of Claims 1 to 17, **characterized in that** the device comprises a telescope (35), which is arranged after the second array (9, 9a, 9b, 9a₁, 9a₂, 9b₁, 9b₂) of lens means (10) or after the at least one further array (37) of lens means in the propagation direction (Z) of the light (6) to be influenced.

19. Device according to one of Claims 1 to 18, **characterized in that** the lens means (2) of the first array (1, 1a. 1b, 1a₁, 1a₂, 1b₁, 1b₂) of lens means (2) and/or the lens means of the second array (9, 9a, 9b, 9a₁, 9a₂, 9b₁, 9b₂) of lens means (10) and/or the lens means of the at least one further array (37) of lens means are designed as cylinder lenses.

20. Device according to Claim 19, **characterized in that** the cylinder axes of the lens elements, arranged on the first and second optically functional interfaces, of the first array (1, 1a, 1b, 1a₁, 1a₂, 1b₁, 1b₂) of lens means (2) and/or of the second array (9, 9a, 9b, 9a₁, 9a₂, 9b₁, 9b₂) of lens means (10) and/or of the at least one further array (37) of lens means are aligned mutually perpendicularly or parallel.

21. Device according to one of Claims 1 to 20, **characterized in that** one or more of the arrays (27, 29) of lens means and/or one or more of the arrays (26, 30) of phase-modifying means and/or one or more of the lens means (28) are designed as integrated optical components.

22. Device according to one of Claims 1 to 21, **characterized in that** the lens means (28) of one or more of the arrays (27, 29) of lens means are designed as geodesic lenses.

23. Device according to one of Claims 1 to 22, **characterized in that** the phase-modifying means (4, 12) of one or more of the arrays (3, 3a, 3b, 11, 11a, 11b) of phase-modifying means are designed as electro-optical modulators or acousto-optical modulators or as liquid crystal-based modulators.

24. Use of a device according to one of Claims 1 to 23, **characterized in that** the device is used for beam deviation.

25. Use according to Claim 24, **characterized in that** the device is employed in the field of laser television.

26. Use according to Claim 24, **characterized in that** the device is employed in the field of optical data storage.

27. Use of a device according to one of Claims 1 to 23, **characterized in that** the device is used as a commutator.

## Revendications

1. Dispositif destiné à influencer la lumière (6), comprenant :
- un premier réseau (1, 1a, 1b, 1a₁, 1a₂, 1b₁, 1b₂) de moyens à lentilles (2) à travers lesquels la lumière (6) à influencer peut passer au moins partiellement ;
- un premier réseau (3, 3a, 3b) de moyens (4) de modification des phases, qui peuvent modifier les phases de la lumière (6) qui a passé à travers les moyens à lentilles (2) individuels du premier réseau (1, 1a, 1b, 1a₁, 1a₂, 1b₁, 1b₂) de moyens à lentilles (2) ;
- un second réseau (9, 9a, 9b, 9a₁, 9a₂, 9b₁, 9b₂) de moyens à lentilles (10) à travers lesquels la lumière ayant passé à travers le premier réseau (3, 3a, 3b) de moyens (4) de modification des phases peut passer au moins partiellement, dans lequel le second réseau (9, 9a, 9b, 9a₁, 9a₂, 9b₁, 9b₂) de moyens à lentilles (10) est disposé dans le dispositif de telle manière qu'une pluralité de maxima d'intensité locaux (17) de la lumière (6) à influencer peuvent être créés, dans la direction de propagation (Z) de la lumière (6) à influencer à l'avant du second réseau (9, 9a, 9b, 9a₁, 9a₂, 9b₁, 9b₂) de moyens à lentilles (10) ou dans la région du second réseau (9, 9a, 9b, 9a₁, 9a₂, 9b₁, 9b₂) de moyens à lentilles (10) ;
- des premiers moyens à lentilles (5) qui sont disposés entre le premier réseau (1, 1a, 1b, 1a₁, 1a₂, 1b₁, 1b₂) de moyens à lentilles (2) et le second réseau (9, 9a, 9b, 9a₁, 9a₂, 9b₁, 9b₂) de moyens à lentilles (10), dans lequel le premier réseau (3, 3a, 3b) de moyens (4) de modification des phases est disposé à l'arrière des premiers moyens à lentilles (5), dans la direction de propagation (Z) de la lumière (6) à influencer,
**caractérisé en ce que**
- le dispositif comprend des seconds moyens à lentilles (22) qui sont disposés entre les premiers moyens à lentilles (5) et le second réseau (9, 9a, 9b, 9a₁, 9a₂, 9b₁, 9b₂) de moyens à lentilles (10), dans lequel :
- le premier réseau (3, 3a, 3b) de moyens (4) de modification des phases est disposé entre les premiers moyens à lentilles (5) et les seconds moyens à lentilles (22), dans lequel
- les premiers moyens à lentilles (5) et les seconds moyens à lentilles (22) sont disposés dans le dispositif de telle manière qu'ils puissent soumettre à une transformée de Fourier la lumière (6) à influencer et dans lequel
- le premier réseau (3, 3a, 3b) de moyens (4) de modification des phases est disposé au niveau ou dans la région du plan de Fourier du côté de sortie des premiers moyens à lentilles (5) et au niveau ou dans la région du plan de Fourier du côté d'entrée des seconds moyens à lentilles (22).

2. Dispositif selon la revendication 1, **caractérisé en ce que** le plan focal du côté de sortie du premier réseau (1, 1a, 1b, 1a₁, 1a₂, 1b₁, 1b₂) des moyens à lentilles (2) correspond au plan de Fourier du côté d'entrée des premiers moyens à lentilles (5) ou est disposé dans la région du plan de Fourier du côté d'entrée des premiers moyens à lentilles (5).

3. Dispositif selon l'une des revendications 1 ou 2, **caractérisé en ce que** le plan focal du côté d'entrée du second réseau (9, 9a, 9b, 9a₁, 9a₂, 9b₁, 9b₂) de moyens à lentilles (10) correspond au plan de Fourier du côté de sortie des seconds moyens à lentilles (22) ou est disposé dans la région du plan de Fourier du côté de sortie des seconds moyens à lentilles (22).

4. Dispositif selon l'une des revendications 1 à 3, **caractérisé en ce que** les premiers moyens à lentilles (5) et les seconds moyens à lentilles (22) forment un télescope ou une configuration analogue à un télescope.

5. Dispositif selon l'une des revendications 1 à 4, **caractérisé en ce que** les premiers moyens à lentilles (5) et les seconds moyens à lentilles (22) forment un système télécentrique.

6. Dispositif selon l'une des revendications 1 à 5, **caractérisé en ce que** les premiers moyens à lentilles (5) et les seconds moyens à lentilles (22) sont disposés de telle manière que le plan focal du côté de sortie des premiers moyens à lentilles (5) et le plan focal du côté d'entrée des seconds moyens à lentilles (22) correspondent l'un à l'autre ou soient disposés pratiquement dans la même région.

7. Dispositif selon l'une des revendications 1 à 6, **caractérisé en ce que** les premiers moyens à lentilles (5) et/ou les seconds moyens à lentilles (22) comprennent une pluralité de lentilles (5a, 5b, 5c, 5d ; 22a, 22b, 22c, 22d).

8. Dispositif selon l'une des revendications 1 à 7, **caractérisé en ce que** le premier réseau (1, 1a, 1b, 1a₁, 1a₂, 1b₁, 1b₂) de moyens à lentilles (2) et/ou le second réseau (9, 9a, 9b, 9a₁, 9a₂, 9b₁, 9b₂) de moyens à lentilles (10) présentent des première et seconde surfaces de séparation à fonctionnalité optique qui sont mutuellement espacées dans la direction de propagation (Z) de la lumière (6) à influencer, dans lequel un réseau d'éléments de lentilles est formé sur chacune des surfaces de séparation.

9. Dispositif selon la revendication 8, **caractérisé en ce que** l'espacement entre les première et seconde surfaces de séparation à fonctionnalité optique du premier réseau (1, 1a, 1b, 1a₂, 1a₂, 1b₁, 1b₂) de moyens à lentilles (2) et/ou du second réseau (9, 9a, 9b, 9a₁, 9a₂, 9b₁, 9b₂) de moyens à lentilles (10) correspond à la distance focale (f₁) des éléments de lentilles des première et/ou seconde surfaces de séparation à fonctionnalité optique, dans la direction de propagation (Z) de la lumière (6) à influencer.

10. Dispositif selon l'une des revendications 1 à 9, **caractérisé en ce que** le dispositif comprend un second réseau (11, 11a, 11b) de moyens (12) de modification des phases, qui est disposé, dans la direction de propagation (Z) de la lumière (6) à influencer, à l'avant ou à l'arrière du second réseau (9, 9a, 9b, 9a₁, 9a₂, 9b₁, 9b₂) de moyens à lentilles (10) ou dans la région du second réseau (9, 9a, 9b, 9a₁, 9a₂, 9b₁, 9b₂) de moyens à lentilles (10).

11. Dispositif selon l'une des revendications 1 à 10, **caractérisé en ce que** des parties de la lumière (6) à influencer passant à travers différents moyens (4 ; 12) de modification des phases du premier et/ou du second réseau (3, 3a, 3b ; 11, 11a, 11b) de moyens (4 ; 12) de modification des phases, peuvent subir des modifications mutuellement différentes de leurs phases dans les moyens (4 ; 12) de modification des phases.

12. Dispositif selon l'une des revendications 8 à 11, **caractérisé en ce que** le premier réseau (3, 3a, 3b) de moyens (4) de modification des phases est disposé entre les deux surfaces de séparation à fonctionnalité optique du premier réseau (1, 1a, 1b, 1a₁, 1a₂, 1b₁, 1b₂) de moyens à lentilles (2), dans la direction de propagation (Z) de la lumière (6) à influencer, et/ou en ce que le second réseau (11, 11a, 11b) de moyens (12) de modification des phases est disposé entre les deux surfaces de séparation à fonctionnalité optique du second réseau (9, 9a, 9b, 9a₁, 9a₂, 9b₁, 9b₂) de moyens à lentilles (10), dans la direction de propagation (Z) de la lumière (6) à influencer.

13. Dispositif selon l'une des revendications 1 à 12, **caractérisé en ce que** le dispositif comprend au moins un réseau supplémentaire (37) de moyens à lentilles à travers lesquels la lumière ayant passé à travers le second réseau (9, 9a, 9b, 9a₁, 9a₂, 9b₁, 9b₂) de moyens à lentilles (10) peut au moins partiellement passer, dans lequel ledit au moins un réseau supplémentaire (37) de moyens à lentilles est disposé dans le dispositif ou bien dans lequel le dispositif est configuré de telle manière qu'une pluralité de maxima d'intensité locaux (48) de la lumière (6) à influencer peuvent être créés, dans la direction de propagation (Z) de la lumière (6) à influencer, à l'avant de l'au moins un réseau supplémentaire (37) de moyens à lentilles ou dans la région de l'au moins un réseau supplémentaire (37) de moyens à lentilles.

14. Dispositif selon la revendication 13, **caractérisé en ce que** le dispositif comprend des moyens à lentilles supplémentaires (24) qui sont disposés entre le second réseau (9, 9a, 9b, 9a₂, 9a₂, 9b₁, 9b₂) de moyens à lentilles (10) et l'au moins un réseau supplémentaire (37) de moyens à lentilles.

15. Dispositif selon la revendication 14, **caractérisé en ce que** le plan focal du côté de sortie des moyens à lentilles du second réseau (9, 9a, 9b, 9a₁, 9a₂, 9b₁, 9b₂) de moyens à lentilles (10) correspond au plan focal du côté d'entrée ou au plan de Fourier des moyens à lentilles supplémentaires (24) ou est disposé dans la région du plan focal du côté d'entrée ou du plan de Fourier des moyens à lentilles supplémentaires (24).

16. Dispositif selon l'une des revendications 13 à 15, **caractérisé en ce que** le dispositif comprend au moins un réseau supplémentaire (38) de moyens de modification des phases, qui est disposé, dans la direction de propagation (Z) de la lumière (6) à influencer, à l'avant ou à l'arrière de l'au moins un réseau supplémentaire (37) de moyens à lentilles ou dans la région de l'au moins un réseau supplémentaire (37) de moyens à lentilles.

17. Dispositif selon l'une des revendications 1 à 16, **caractérisé en ce que** le dispositif comprend un moyen à lentilles (23, 29) qui est disposé, dans la direction de propagation (Z) de la lumière (6) à influencer, à l'arrière du second réseau (9, 9a, 9b, 9a₁, 9a₂, 9b₁, 9b₂) de moyens à lentilles (10) ou à l'arrière de l'au moins un réseau supplémentaire (37) de moyens à lentilles.

18. Dispositif selon l'une des revendications 1 à 17, **caractérisé en ce que** le dispositif comprend un télescope (35) qui est disposé, dans la direction de propagation (Z) de la lumière (6) à influencer, à l'arrière du second réseau (9, 9a, 9b, 9a₁, 9a₂, 9b₁, 9b₂) de moyens à lentilles (10) ou à l'arrière de l'au moins un réseau supplémentaire (37) de moyens à lentilles.

19. Dispositif selon l'une des revendications 1 à 18, **caractérisé en ce que** les moyens à lentilles (2) du premier réseau (1, 1a, 1b 1a₁, 1a₂, 1b₁, 1b₂) de moyens à lentilles (2) et/ou les moyens à lentilles du second réseau (9, 9a, 9b, 9a₁, 9a₂, 9b₁, 9b₂) de moyens à lentilles (10) et/ou les moyens à lentilles de l'au moins un réseau supplémentaire (37) de moyens à lentilles sont réalisés sous la forme de lentilles cylindriques.

20. Dispositif selon la revendication 19, **caractérisé en ce que** les axes de cylindre des éléments de lentilles disposés sur les première et seconde surfaces de séparation à fonctionnalité optique du premier réseau (1, 1a, 1b, 1a₁, 1a₂, 1b₁, 1b₂) de moyens à lentilles (2) et/ou du second réseau (9, 9a, 9b, 9a₁, 9a₂, 9b₁, 9b₂) de moyens à lentilles (10) et/ou de l'au moins un réseau supplémentaire (37) de moyens à lentilles sont orientés perpendiculairement ou parallèlement les uns aux autres.

21. Dispositif selon l'une des revendications 1 à 20, **caractérisé en ce que** l'un ou plusieurs des réseaux (27, 29) de moyens à lentilles et/ou l'un ou plusieurs des réseaux (26, 30) de moyens de modification des phases et/ou l'un ou plusieurs des moyens à lentilles (28) sont réalisés sous la forme d'éléments optiques intégrés.

22. Dispositif selon l'une des revendications 1 à 21, **caractérisé en ce que** les moyens à lentilles (28) de l'un ou de plusieurs des réseaux (27, 29) de moyens à lentilles sont réalisés sous la forme de lentilles géodésiques.

23. Dispositif selon l'une des revendications 1 à 22, **caractérisé en ce que** les moyens (4, 12) de modification des phases de l'un ou de plusieurs des réseaux (3, 3a, 3b, 11, 11a, 11b) de moyens de modification des phases sont réalisés sous la forme de modulateurs électro-optiques ou de modulateurs acousto-optiques ou sous la forme de modulateurs à base de cristaux liquides.

24. Utilisation d'un dispositif selon l'une des revendications 1 à 23, **caractérisée en ce que** le dispositif est utilisé pour la déviation de faisceaux.

25. Utilisation selon la revendication 24, **caractérisé en ce que** le dispositif trouve une utilisation dans le domaine de la télévision laser.

26. Utilisation selon la revendication 24, **caractérisé en ce que** le dispositif trouve une utilisation dans le domaine de la mémorisation optique de données.

27. Utilisation d'un dispositif selon l'une des revendications 1 à 23, **caractérisé en ce que** le dispositif est utilisé comme commutateur.
